(19) Europäisches Patentamt
European Patent Office
Office européen des brevets

(11) **EP 4 730 206 A1**

(12) **EUROPEAN PATENT APPLICATION**

(43) Date of publication:
**22.04.2026   Bulletin 2026/17**

(51) International Patent Classification (IPC):
*G06N 3/09* (2023.01)       *G06N 20/00* (2019.01)

(21) Application number: **25190029.6**

(52) Cooperative Patent Classification (CPC):
**G06N 3/09; G06N 20/00;** G06N 3/045; G06N 3/092

(22) Date of filing: **16.07.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.09.2024   US 202463695604 P**

(71) Applicant: **Rickard Consulting Group, Inc.**
**Chsterfield, MO 63017 (US)**

(72) Inventors:
• **Rickard, Robert**
  **Chesterfield, MO 63017 (US)**
• **Voshell, Martin**
  **York, ME 03090 (US)**
• **Tittle, James**
  **Depoe Bay, OR 97341 (US)**
• **Flavin, Timothy**
  **Chesterfield, MO 63005 (US)**

(74) Representative: **Crowell & Moring U.K. LLP**
**199 Bishopsgate**
**London EC2M 3TY (GB)**

(54) **HIERARCHICAL CONTEXTUALIZATION OF DATA FOR ADAPTIVE LEARNING AND AUTONOMY IN MULTI-ACTOR APPLICATIONS**

(57)    This disclosure relates generally to the fields of data management, collection, conditioning, and curation for driving advanced data analytics, artificial intelligence (AI) and machine learning (ML), and more particularly to contextualized data collection and curation for adaptive learning and for training advanced autonomy models in multi-actor applications in dynamic high-risk environments (e.g., multi-domain socio-technical work environments (MSWEs))-from mission control to military operations, from operating rooms to racecar engineering-where experts must effectively employ technologies to drive data-informed decisions based on situational assessment. This disclosure provides enabling technology for ML-based autonomy solutions to effectively utilize current and emerging analysis and debrief tools across relevant domains, which necessitates an inclusion of formal data contextualization processes. These processes support training the next generation of experts and simultaneously generate relevant contextually labeled data for adaptive learning and training advanced ML models for event-driven autonomy operations.

FIG. 4

EP 4 730 206 A1

**Description**

CROSS REFERENCE TO RELATED APPLICATION

This application claims the benefit of U.S. Provisional Patent Application No. 63/695,604, filed September 17, 2024, with the U.S. Patent and Trademark Office, which is herein incorporated by reference in its entirety.

TECHNICAL FIELD

This disclosure relates to systems and methods for data contextualization and curation in Artificial Intelligence (AI) and Machine Learning (ML) applications. More particularly, the disclosure pertains to techniques for collecting, conditioning, and curating data to generate labeled datasets fortified with human-expert context, enabling enhanced adaptive learning algorithms and training of autonomous decision-making models.

BACKGROUND

Data curation encompasses systematic acquisition, processing, validation, and lifecycle management of multi-source and diverse data assets to ensure quality, context, and pedigree for deployment in AI/ML systems requiring human oversight and/or autonomous operation. Data gathering approaches may apply complex transformations of unstructured objective data (e.g., text, images, audio, video, telemetry) into structured representations suitable for ML training.

SUMMARY

This disclosure relates to systems and methods for curation of contextualized data using trusted human expertise in AI and ML applications. More particularly, the disclosure pertains to techniques for collecting, conditioning, and curating both objective and subjective data to generate labeled datasets fortified with human-expert context, enabling enhanced adaptive learning algorithms and training of autonomous decision-making models. Contextualized data will lead to reduced ML model training estimation error which would result in increased trust and explainability in models produced from such data. ML utilizing these data are uniquely beneficial to multi-agent and multi-actor systems operating in dynamic, high-stakes environments-from space mission control, to advanced air traffic control systems, to military operations, from medical operating rooms to racecar engineering-where domain experts must effectively employ technologies to support real-time situational assessment and drive data-driven decisions critical for system performance and safety. This disclosure provides enabling technology for ML-based autonomy solutions to effectively utilize current and emerging analysis and debrief tools across relevant data domains/use cases, which necessitates an inclusion of a formal data contextualization process. Our processes support training the next generation of experts with respect to effective and consistent data labeling and simultaneously generate relevant contextual information for labeled data with reduced model training estimation error. This error reduction logically leads to more trustworthy models better enabling adaptive learning and training of advanced ML models for event-driven autonomy applications.

According to one aspect, a method for data collection and curation in a multi-domain socio-technical work environment (MSWE) is provided. The method may include source data ingested from multiple domains and individuals from different interacting work environments and correlated through contextual data labeling. As the source data builds to a level of reliable quantity and quality, that data can be correlated en masse to be leveraged to train models that could automatically generate future data labels at a larger scale. The source data, labeled with contextual information through human or automated processes, is filtered to produce a refined dataset. For this filtered dataset, supplementary labels could in principle be automatically generated to enrich the existing annotations. A set of initial environment models are trained and target multi-domain models could be generated from the initial environment models via multiple ML techniques including reinforcement learning (RL). Multiple agents are autonomously controlled using the target multi-domain operation models in a multi-domain operation environment.

According to another aspect, a method for data contextualization for a MSWE executable by a processor is disclosed. The method may include receiving event data items for multi-domain operation of the MSWE captured via instrumentation from multiple domains. Subjective contextual information data items provided by annotators of the event data items is obtained, whereby at least a portion of the subjective contextual information data items is obtained by periodical queries of true objective functions for trusted learning. Objective contextual information data items pertaining to the annotators are retrieved, whereby the subjective contextual information data items include a plurality of distinct types. The objective contextual information data items are transformed into trustworthiness measures via multi-dimensional embedding vectors. The event data items, the subjective contextual information data items, the objective contextual information data items, and the trustworthiness measures are integrated into a contextually labeled source data to enable the trusted learning.

In one or more implementations of any one of the aspects above, the subjective contextual information data items includes one or more of: a subjective scenario descriptor of an event, an event objective, event objective prioritization, a support goal of the event, a support task for the event, plan-adherence information, accepted risk information, time constraints for the event, inter-domain coordination synchronization information, situation assessment of the event, actual or inferred adverse capability, re-task effectiveness, and/or any combination of the above.

In one or more implementations of any one of the aspects or implementations above, the subjective contextual information data items are obtained in a hierarchical manner.

In one or more implementations of the aspects or implementations above, the subjective contextual information data items include at least a real-time portion and a post-event portion obtained during and after an event, respectively.

In one or more implementations of the aspects or implementations above, the method further includes filtering the contextually labeled source data to generate filtered data.

In one or more implementations of the aspects or implementations above, the method further includes training a set of initial MSWE models, where each MSWE model is applied to a particular domain and being trained using both the contextually labeled source data of the particular domain and the contextually labeled source data as filtered from one or more other domains.

In one or more implementations of the aspects or implementations above, the method further includes generating target multi-domain operation models from the initial MSWE models via RL.

In one or more implementations of the aspects or implementations above, the method further includes autonomously controlling multiple agents using the target multi-domain operation models in a multi-domain operation environment.

In one or more implementations of the aspects or implementations above, the target multi-domain operation models comprise a plurality of agent models and a value decomposition network.

In one or more implementations of the aspects or implementations above, each of the plurality of agent models comprises a hierarchical network for controlling one of the multiple agents.

In one or more implementations of the aspects or implementations above, each agent of the multiple agents corresponds to a soft actor critic architecture.

In one or more implementations of the aspects or implementations above, each agent of the multiple agents includes an actor and a critic.

In one or more implementations of the aspects or implementations above, each actor corresponds to a Q function approximator.

In one or more implementations of the aspects or implementations above, each critic corresponds to a policy approximator.

In one or more implementations of the aspects or implementations above, the method further includes selecting a ML algorithm from among a plurality of ML algorithms.

In one or more implementations of the aspects or implementations above, the multiple agents are autonomously controlled by the selected ML algorithm based on the target multi-domain operation models in the MSWE.

In one or more implementations of the aspects or implementations above, the multiple agents comprise a plurality of autonomous aircraft configured to perform a combat mission.

According to another aspect, a system comprising a memory for storing instructions and at least one processor for executing the instructions to perform of the method of any one of the aspects or implementations above is disclosed.

According to yet another aspect, a non-transitory computer-readable storage medium is disclosed for storing instructions, which, when executed by at least one processor of a system, are configured to cause the system to perform the method of any one of the aspects or implementations above.

BRIEF DESCRIPTION OF THE DRAWINGS

These and other objects, features and advantages will become apparent from the following detailed description of illustrative embodiments, which is to be read in connection with the accompanying drawings. The various features of the drawings are not to scale as the illustrations are for clarity in facilitating the understanding of one skilled in the art in conjunction with the detailed description. In the drawings:

FIG. 1 illustrates a networked computer environment according to at least one embodiment;
FIG. 2 is a block diagram of a data curation pipeline according to at least one example embodiment;
FIG. 3 is a block diagram of a data flow for a hybrid ML pipeline according to at least one example embodiment;
FIG. 4 is a block diagram of a system for data collection and curation in a multi-domain operation environment according to at least one example embodiment;
FIG. 5 is an example operational flowchart illustrating the steps carried out by a program that collects and curates data in a multi-domain operation environment; and

FIG. 6 is a block diagram of internal and external components of computers and servers depicted in FIG. 1 according to at least one example embodiment.

FIG. 7 is a diagram illustrating learned and desired functions for two samples drawn from two clusters according to at least one example embodiment.

DETAILED DESCRIPTION

Detailed embodiments of the claimed structures and methods are disclosed herein; however, it can be understood that the disclosed embodiments are merely illustrative of the claimed structures and methods that may be embodied in various forms. Those structures and methods may, however, be embodied in many different forms and should not be construed as limited to the exemplary embodiments set forth herein. Rather, these exemplary embodiments are provided so that this disclosure will be thorough and complete and will fully convey the scope to those skilled in the art. In the description, details of well-known features and techniques may be omitted to avoid unnecessarily obscuring the presented embodiments.

As previously discussed, data curation encompasses systematic acquisition, processing, validation, and lifecycle management of multi-source and diverse data assets to ensure quality, context, and pedigree for deployment in AI/ML systems requiring human oversight and/or autonomous operation. Traditional data gathering approaches apply complex transformations of unstructured objective data (e.g., text, images, audio, video, telemetry) into structured representations suitable for ML training. However, while this may be necessary to reduce dimensionality and standardize model training inputs, it is insufficient in that it may not incorporate contextualized subjective data from high-skilled experts essential for building trust and explainability of resultant AI/ML models and algorithms.

As disclosed herein, adding contextualized data from experienced domain subject matter experts results in the following improvements for any representative ML model training process: 1) reduced feature space complexity by providing a compressed representations of the feature space without significant loss of information, 2) decreased size of the functional search space by providing feature importance and decision boundary direction for representative exemplars while additionally decreasing the minimum distance between the function space being searched and the true function, and 3) limiting goal specification error by periodically querying the true objective function directly (commanding officer/user/-expert) instead of a surrogate objective. When multiple coordinating experts identify and recognize events from diverse multi-dimensional data feeds (e.g., GPS coordinates, vehicle telemetry, LiDAR point clouds, camera imagery, radar tracking, accelerometer readings, gyroscope data), what experts find informative are directly recognized and perceived event patterns in underlying monitored processes. In such multi-actor environments, the most informative features are event-related, where attributes of events in progress and event patterns depend on integrating a wide variety of variables while also coordinating knowledge, mindsets, and goals to describe effects when gathering event data. Likewise, traceable expert human inputs that unlock explainability in AI/ML models is now possible whereas traditional RL techniques preclude this capability.

It may be appreciated that contextualized data may lead to reduced ML model training estimation error which would result in increased trust and explainability in models produced from contextualized data. ML models utilizing these data are uniquely beneficial to multi-agent and multi-actor systems operating in dynamic, high-stakes environments-from space mission control, to advanced air traffic control systems, to military operations, from medical operating rooms to racecar engineering-where domain experts must effectively employ technologies to support real-time situational assessment and drive data-driven decisions critical for system performance and safety. This disclosure provides enabling technology for ML-based autonomy solutions to effectively utilize current and emerging analysis and debrief tools across relevant data domains/use cases, which necessitates an inclusion of a formal data contextualization process. Aspects of the present disclosure may support training the next generation of experts with respect to effective and consistent data labeling and simultaneously generate relevant contextual information for labeled data with reduced model training estimation error. This error reduction logically leads to more trustworthy models better enabling adaptive learning and training of advanced ML models for event-driven autonomy applications.

The disclosed methods, therefore, are particularly applicable to multi-agent and multi-actor systems operating in dynamic, high-stakes environments where expert real-time situational assessment and data-driven decision support are critical for system performance and safety. Within this disclosure, these environments are referenced as multi-domain socio-technical work environments (MSWE) with both military (referred to as multi-domain operations, such as land, space, cyber, air, and sea) and commercial (such as medical, sportscar racing, and law enforcement simulator, live telemetry, and computer generated) subset domains contained therein.

## Multi-domain Socio-technical Work Environment (MSWE)

By way of introduction to one aspect of this disclosure, a MSWE may be defined as any complex system where people, technology, processes, and information interact across multiple, overlapping domains such as the physical, digital, social, organizational, and informational spaces. In such environments, successful operation depends on the real-time integration of human decision-making, technical tools, and organizational structures, often under dynamic and uncertain conditions. For example, a plurality of machines may need to be controlled or operated collaboratively in an environment at any given time. These machines may belong to distinct types. There may be one or more machines of each type operating or being deployed in the environment. Each of these machines may be controlled to take actions according to a current state of the environment. These actions are traditionally taken by human operators and may aim toward optimizing a collective benefit. The current state of the environment with respect to a particular machine may include, for example, the portion of the environment that is observable by or to the particular machine (via observation by a human operator or by instrumentation), and other circumstances of the environment that are not observable by the machine but obtainable. These latter circumstances, though not observable, may nevertheless critically impact what optimal actions should be taken by the particular machine at a given moment and how the actions should be taken.

A specific example may be found in the battlefield environment (either in actual combat or in missions for combat training purposes). The plurality of machines may include different types, including but not limited to fighter jets or aircraft, drones, satellites, ground vehicles, battleships, and the like. These machines may be operated, for example, to maneuver in the battlefield, and/or to engage weaponry. As such, each machine may include a piloting system and a weapon system. Each of these machines may have individual goals. Individual goals, however, may or may not be, or remain, aligned with a set of group goals as the current state of the environment evolves. It is nonetheless critical that these individual machines optimize the probability of achieving the set of group goals according to the current state of the environment rather than optimizing the individual goals only.

Traditionally, each function of these machines, for example, may be controlled by one or more human operators (e.g., a battle manager, a mission monitor, a fighter pilot). The human operators strategize and manage the operation of the machines according to their observation of the environment (via their own observation or mediated through instruments). The operator of one machine may further determine a next action based on observed past, and/or current actions, and/or anticipated future actions of other friendly and/or adversary machines.

Military operations in the example environment above may be specifically referred to as Multi-Domain Operations (MDOs) as they involve multiple distinct types of machines each having distinct domains with distinct functionalities and capabilities. Such an environment may correspondingly be referred to using the general term of MSWE. The battlefield environment above is merely one of many examples of an MSWE. Other MSWEs may include but are not limited to air traffic control, integrated military command and weapons systems, healthcare operations, heavy machinery and construction, or motorsport where decision-making actions and outcomes emerge from continuous interaction and collaboration between technical systems, human teams, and multiple work or operational domains.


## Introduction to Human and Machine Learning in MSWEs Relying on Historically Procured Data

MSWEs are highly complex environments where historical data collected from past operational sessions may be utilized and consumed for various human and machine learning purposes, to include identifying or informing optimal decision-making actions and outcomes for future operational sessions. As one traditional example, past operational data may be procured and processed to provide learning material to educate and train human operators for future operations. For a particular example in the military MDO context, past MDO data collected during combat operations or training missions may be used to generate training manuals guidelines and other learning tools for military personnel.

As another military example, historical MDO data may be used to train various autonomy models that may be used in operational environments. Specifically, it may be desired to provide autonomy to one or more or all of functions of the machines for the domain above. For example, an autonomous machine in the battlefield context above may be provided with either autonomous piloting/driving capability or an autonomous weapon system, or both. Such autonomy may be supported by circuitry containing or running one or more trained models, which process input data including sensor inputs, human input, communications from other machines, and other information to generate automatic piloting and/or weapon engagement actions/activations. These models may be based on any suitable AI or ML algorithm. The training of these models may be performed via initially labeled training datasets collected from past operations, in combination with RL, and in some example implementations, with user feedback.

Autonomy integration in MSWEs, particularly for mission-critical military MDO, requires highly trustworthy AI and ML models due to its nature of low or no-error tolerance. Such autonomy may be referred to as Trusted Advanced Autonomy (TAA). A platform and the underlying models for TAA are very difficult to establish/train in an accurate manner in at least three aspects. Firstly, the machines involved in MSWE usually interact in complex and unexpected manners, thereby requiring very complex optimization objectives, much more than, for example, optimization of vehicles autonomously driven on roadways to avoid causing a collision. Secondly, the training data must be accurate, trustworthy, and comprehensive in order to provide the required low or no-error tolerance. Thirdly, while training such complex models will typically require a very large amount of labeled training data, the creation of such training data require data labeling by domain-specific experts that only exist in a small numbers (in stark contrast to data labeling other types of AI/Ml models that

operate in domains for which training data can be accurately labeled by crowd sourcing or other non-expert data labelers). As a result, sufficient labeled training data for MSWE either do not exist or are of very limited availability.

## Data Contextualization

For the example human or machine learning purposes described above, the historical operational session data may only become informative and effective based on its relationship to the context of the operational session in which it is collected. In other words, historical data is inherently context-sensitive. Contextual information of the data is particularly critical in MSWEs because the complexity can often be hidden in non-observable elements of the domain not directly related to the current state of an autonomous agent, as described below. Contextual information, as described herein, may include subjective understanding and perception of particular events or decisions by interacting participants in the work environment, and may further include objective information associated with the participants themselves. Specifically, the subjective portion of the contextual information embeds reasoning for decisions for particular action in the MSWE, while the objective portion of the contextual data may include information such as the participants' role or roles in the operation, experience, expertise, and demographics data. In the case of RL or Reinforcement Learning with Human Feedback (RLHF) model training, contextual information may also include actions of an agent operating in a complex environment. Both the subjective portion and objective portion of the contextual data inform or suggest a level of trustworthiness of labeling of the MSWE data as provided by the participants as expert labelers. Thus, contextualized data may provide outsized impact on model training outcomes in the absence of robust labeled training datasets for MSWEs.

Unfortunately, contextual information, may not always be captured and attached to the underlying data, rendering such underlying data potentially misleading. Specifically, source data (objective data) alone may indicate a false similarity in reference to conditions that are actually significantly different when viewed in context of a more fully understood complex domain as described below. Thus, source data alone may be ineffective for learning purposes in many applications, including both human and machine learning.

In military MDO settings, for example, armed forces worldwide rely heavily on postmission reconstruction to examine human performance in complex and classified MDO scenarios. These events, known as debriefs, are intended to determine lessons for improvement for the participants. However, none of the critical human expert subjective assessments (the context) are captured, labeled, and stored as part of a dataset that can be used again in the future. Therefore, the important context for decision-making that is reflected in the source data available from machines (e.g., telemetry data from the aircraft involved) remains solely in the minds of those who participated that day. The limited data that is saved is simplistic objective information (e.g., the aircraft telemetry) devoid of subjective reasoning vital in the event-driven and subjective decision driven environment to improve future analysis, preparation, rehearsal, and planning. As a result, ML and autonomy trained on such contextless and thus less-trustworthy data is likely on a flawed path with respect to TAA. For example, the absence of this contextual data may lead to RL model training with under specified reward functions that fail to capture the full range of real-world objectives of human participants in a complex domain as described below.

As such, capturing the subjective portion of the contextual information would dramatically improve both human learning and TAA as such contextual information informs reasoning behind MSWE actions and decisions. Humans cannot effectively learn without knowing the decision context. Knowing the decision context creates access to repeatable and explainable reasoning grounded in the understanding of potentially non-observable circumstances considered prior to the decision being made. When those factors are paired with objective data, a valuation of trust relative to desired outcome can be accurately assigned. While AI may be able to contrive context in certain situations given enough data, advancing an AI algorithm to appropriate contextual decision-making in data sparse areas such as MSWEs is elusive and low-trust especially without access to subjective reasoning data. Otherwise, AI training has nothing to contrast against the observable data to optimize for a desired outcome in the operational context. However, contextualized event labeling by domain-specific experts constitutes a clear contrastive signal to drive more efficient model training because the expert would not label a particular event as meaningful if the desired decision would not change based on that event as described below. In short, following a contextless paradigm makes it mathematically inefficient and error prone, as described below, for an AI algorithm to consistently generate trustable decisions aligned with human intention/desired outcome. This is acutely true in ML applications serving domains with an insufficiency of experts and expert labeled data such as MSWEs. As such, TAA cannot effectively learn in a trustworthy manner without contextualized data.

The subjective portion of context described above relates to the context for decision making in the MSWE by the participants. Capturing of such contextual information, while critical for curation of operational data for enabling effective human learning and TAA, may turn out to be laborious, incomplete, and/or inaccurate in many situations unless processes to enable quantification and recording of trustworthiness of such information are put in place, as described in further example implementations below.

For example, such subjective contextual information may include domain expert annotation and markup of MSWE events. Specifically, in a MSWE such as in military MDO, contextual sensitivity can be derived from subjective markup and annotation of event patterns, the lack of which presents a significant barrier for traditional ML-based event recognition. Due to complexity of MDO, capturing of all or at least some portion of such contextual information may rely on the domain experts, e.g., fighter pilots, commanders, to generate contextual information that is useful and effective for leaning purposes. Capturing of such expert-generated contextual information is a key enabler for human learning and or autonomy learning for individual and/or teaming solutions that amplify domain expert monitoring and reasoning in terms of events. How expert context labeling can support ML model training that is both more efficient, requiring less data, and is less prone to the errors driven by inaccurate or insufficiently complex reward functions is described in further detail below.

In another aspect, subjective contextualization of data must also occur across the mission lifecycle of a MSWE, including but not limited to planning, execution, and debrief stages/phases of an MDO. Some or all of the phases presented here require that domain expert data contextualization labelers can view a multi-dimensional (temporal, geospatial, functional) representation (which could be provided by multiple systems of a single integrated data visualization tool) of all relevant data for identifying the informative spatiotemporal event patterns.

In another aspect, subjective contextualization of the MSWE data may be cross-domain to generate cross-domain correlation that is critical for human and machine learning in MSWE settings. For example, a team of domain experts may contribute to providing the contextual information of the operational data which would inherently contain cross-domain correlation.

Further, subjective contextual information may originate from different experts with different experience and demographics, which may affect the trustworthiness of the contextual information. As such, the contextual information above, besides subjective contextual information, may further include objective domain expert information, which may be curated along with the domain expert annotation as subjective contexts. Such objective contextual information may include demographics, experience, expertise, positions, and the like of the domain experts providing the annotation and markup data. Such information, once curated and recorded, may be extracted and aggregated during the learning processes above (either human or machine learning) in a future time to determine usage priority and/or level of trustworthiness of the underlying expert annotations and markups for human or machine learning. For example, annotations by a fighter pilot executing in an MDO training mission with twenty years of warfighting or training experience may be considered as having higher priority and therefore more trustworthy compared to annotations from someone having much shorter experience. For another example, annotation by an expert of a first domain of the MDO about a second domain of the MDO may be considered as having lower priority and lower trustworthiness compared to another annotation of the second domain by another expert of the second domain. An additional challenge of incorporating data labels from experts with different backgrounds and levels of experience results from the potential for increased variance in data labels. However, this challenge can be managed with dynamic weighting including both static measures of expert labeler experience, and dynamically adjusted weights based on comparing expert label performance to ground truth in a particular training scenario as described below.

Once highly trustworthy contextual information is curated and processed from a small number of available domain experts, the data labeled with contextual information may be used to further generate automatic contextual labeling to expand the contextualized dataset for further human leaning and for training autonomy models, as described in further detail below.

## Requirement for Contextual information to Enable Improved Human Learning and Advanced Autonomous Learning in MDOs

Merely as an example, in military MDO environments, the lack of contextualization of data, either or both subjective and objective contextual information, has limited effective human or machine learning to improve combat force's performance. For example, and as described above, the current military platforms for data curation lack requirements that demand an ability to learn beyond what takes place during a mission debrief. As a result, the current systems are missing the opportunity to gain a trove of contextual data, which has prevented progress in generating effective TAA. Current development as a fighting force integrating with complex Autonomous Systems (AS) cannot effectively yield functional teams without a contextualized, multi-domain data set curated by warfighters (domain experts) themselves.

Currently, a diverse number of military MDO data systems generate petabytes of training data but do not effectively leverage it across the larger fighting force (domains). What is retained in the data is largely devoid of context (expert subjective input and expert objective information). As described above, such context-devoid data may be useful only for simple metrics. Consequently, human and machine learning suffer dramatically, and AI and/or autonomy developers have no or little contextualized data to train advanced algorithms that include traceable trust and can be used in a reasonable cadence in combat operations.

For example, from a human learning standpoint in tactical air combat, incoming Air Force Weapons School Classes have no insight into what previous classes learned, nor what they can do differently to improve their performance or mission effectiveness, due to lack of contextualized data. The only continuity of learning for this incredibly expensive 6-month course is in the minds of the instructors. Barring handwritten notes, Red Flag large force air exercise commanders in the US usually have no useful data when US Combatant Commanders ask about US and Allies' performance and true capabilities of leading-edge warfighting units.

As described above, and in further detail below, MSWE contextualized data capture methodology that includes operations, testing, training, and mission rehearsal events would provide a solution to the learning problem above. The contextualized data may contain both objective data and trusted subjective data across all environments (e.g., live and virtual) and span all domains of an MSWE.

Further, the capturing of human expert subjective assessment in MWSEs may result in the ability to "trace learning across time" (e.g., past a mission debrief) to provide the critical context needed to generate a trusted complex autonomous solution. Expert-labeled missions greatly facilitate generation of the necessary data to quickly improve human learning significantly and enable the development of expanded labeling algorithms. Only then can labeling algorithms dramatically increase the efficiency/relevance of developing/maintaining a larger MSWE contextualized data set for complex AS learning/training. And only then can complex and practical autonomy be realized.

The list below indicates example requirements for contextualization of MSWE data for effective human and machine learning and practical cross-domain autonomy:

1. Enaction of a multi-domain contextualized data curation schema that results in a data set that advances human learning in the near term and enables TAA as soon as feasible.
2. Non-contrived context, e.g., warfighters must be the equivalent "data labeling workforce" akin to traditional non-expert human groups (by the thousands) that label for AI models.
3. Experts (especially warfighters in MDOs) will only label if their software platform is or embeds the labeling platform to ensure timely and non-separate actions.
4. Warfighter platform for contextual labeling must transcend all mission types, domains, and environments.
5. The platform must enable analysis at the micro level (a human, a single mission) as well as groups of humans and many missions over time for multi-level correlation extraction.

As such, data curation with contextual labeling is critical for human and machine learning and for generating data for training TAA for use in complex MSWEs, such as warfighting MDO. Without such contextualized data, AS simply cannot coherently choose an optimal action from their own decision matrix nor be trusted and explain why an action was taken.

### Example Event-Driven Data Contextualization Attributes

Non-limiting example contextualization attributes that may be provided by domain experts, particularly in the warfighting MDO environment are listed below. The contextualization attributes may be MSWE event driven.

In some example implementations, the contextualization attributes may include contextual scenario description/complexity, as annotated by the domain expert for the event.

In some example implementations, the contextualization attributes may include MSWE event objectives, as annotated by the domain experts for the event.

In some example implementations, the contextualization attributes may include objective prioritization (e.g., using one of a plurality of predefined priority levels), as annotated by the domain expert for the event.

In some example implementations, the contextualization attributes may include indication of supporting tasks, as annotated by the domain expert for the event.

In some example implementations, the contextualization attributes may include supporting goals, as annotated by the domain expert for the event.

In some example implementations, the contextualization attributes may include participant/Labeler domain expertise demographics, as annotated by the domain expert for the event.

In some example implementations, the participant/Labeler domain expertise demographics may be annotated according to a knowledge and experience criteria, which may be predefined.

In some example implementations, the participant/Labeler domain expertise demographics may include event participants.

In some example implementations, the participant/Labeler domain expertise demographics may include expert Labeler demographics.

In some example implementations, the contextualization attributes may include information about participant labelers (e.g., F1 Race Engineer vs. F1 Driver; flight controller vs. flight director; etc.).

In some example implementations, the contextualization attributes may include plan adherence information, as annotated by the domain expert for the event

In some example implementations, the contextualization attributes may include acceptable risk information, as annotated by the domain expert for the event.

In some example implementations, the contextualization attributes may include information about various time constraints, as annotated by the domain expert for the event.

In some example implementations, the contextualization attributes may include information related to coordination synchronization, as annotated by the domain expert for the event

In some example implementations, the contextualization attributes may include situation assessment, as annotated by the domain expert for the event.

In some example implementations, the contextualization attributes may include decision assessment (e.g., positive, neutral, negative), as annotated by the domain expert for the event.

In some example implementations, the contextualization attributes may include adversary capability (expected and actual), such as adversary intent (inferred or actual) and/or adversary deception detection, as annotated by the domain expert for the event.

In some example implementations, the contextualization attributes may include re-task effectiveness, as annotated by the domain expert for the event.

In some example implementations, the contextualization attributes may include boundary adherence and flexibility information, as annotated by the domain expert for the event. Such boundary adherence and flexibility information may include but is not limited to physical boundaries, geographic boundaries, procedural boundaries (e.g., Rules of Engagement (ROE), Plant Operator procedure), and/or legal boundaries.

### Example Hierarchical Data Contextualization Process

*Multi-Domain Expert Selection Criteria*

At the start of the data contextualization process, subject matter experts (SMEs) are identified across all relevant domains of the MSWE, for a target event, based on knowledge, experience, and key industry standards signifying expertise. The contextualization process may be executed per-event.

*Real-time Data Contextualization (First Phase)*

An example contextualization process may potentially include multiple SMEs simultaneously looking at the multidimensional representation of objective event data and assigning Subjective Contextualization Attributes (among the contextualization attributes above) based on their area of domain expertise. For example, multiple SMEs focusing on specific geographic or functional aspects of a large-scale event could provide richer Subjective Attribute labeling. In a military example, this could be a command-and-control cell, as a SME, monitoring a multi-domain military operation coordinating battlefield effects across kinetic and non-kinetic weapon systems. In a non-military example this could be anesthesiology residents, as SMEs, preparing an operating room in anticipation of patient arrival. This initial contextualization pass would focus on the smallest level of detail (individual events or actions) as observed in real time to reduce memory recall artifacts, to provide a baseline level of contextualization that could be used to train models for autonomous entities at the individual action level or specific parameter states.

*Post Event Data Contextualization (Second Phase)*

In some example implementations, in a second phase of data contextualization, the Subjective Contextualization Attributes in real-time from the first phase above may be combined with the objective data from the multi-dimensional representation and re-assessed by experts after the monitored time-dependent event has completed. This allows further subjective enrichment, and additional Subjective Contextualization Attributes (among the various contextualization attributes above) to be created based on a fuller understanding of the final event outcome. In this second pass, the emphasis would be focused at a higher level related more to hierarchical objective goal achievement, and the application of proper tactics to achieve those outcomes.

*Final Event Contextualization (Third Phase)*

In some example implementations, with insights gained from phase one and two above, the example third phase of the contextualization process may be performed for identifying operationally relevant patterns of change. The Subjective Contextualization Attributes from previous phases may be combined with the objective data from the multidimensional representation and re-assessed by domain experts after the monitored event has completed. The final contextualization assessment phase would include high level decision makers involved in the strategic planning of the event and could also alternatively or additionally include operator/practitioner participants in the event itself to refine and add to the Subjective Contextualization Attributes from the first two phases above. In this third pass for data contextualization, the emphasis would be focused at a strategic level related more to hierarchical objective goal achievement, in the context of operationally relevant data relationships and their implications on overall campaign effectiveness (e.g., mission success, surgical outcome, race finish).

*Contextualized Data Integration to Generate Trusted Data for Human Learning and TAA (Final Phase)*

In some example implementations, the complete set of Subjective Contextualization Attributes and Objective Parameter Data from the previous three phases may be integrated and appropriately formatted based on the specific human learning or ML Model Training requirements for the purpose of enabling TAA applications, e.g., annotations for supervised learning; verification and validation of model performance through testing against evolving courses of dynamic scenarios.

## Objective Contextualization to Qualify/Quantify Trustworthiness of Subject Contextual Information

As described above, in some example implementations, the trustworthiness of the subject contextual information may correlate with the subjective context of the experts including but not limited to expert experiences, demographics, past annotations, the training in which they have participated, their role or roles in the trainings, and the like. Such information is curated as part of the contextual information (e.g., objective contextual information).
Such information, together, may be indicative of the trustworthiness of subject contextual annotation each or a group of experts, and thus can be processed to generate qualification and/or quantification of the subjective contextual annotation. The subsequent human learning or machine learning (e.g., TAA) may be further refined using the contextualized data according to the trustworthiness qualification or quantification.
In some implementations, the trustworthiness of the subjective contextual information may be embedded within the subjective contextual information in the complex manner and thus cannot be extracted by human evaluators into any executable rule set. A ML process for trustworthiness may be employed to convert the objective contextual information of an expert into qualified or quantified measures of the trustworthiness of the expert. The qualified or quantified measures may be multi-dimensional. For example, the trustworthiness of the expert may be qualified or quantified differently in each of the multiple dimensions. The ML process for trustworthiness, for example, may include language models and other neural networks that convert complex subjective information (e.g., including texts, images, voices recordings, and the like) into embedded high-dimensional vector space, and compress and transform the embedded high-dimensional vector values into, for example, multi-dimensional trustworthiness scores.
The qualification and quantification of trustworthiness of the objective contextual information described above may only be performed by models trained through a complex ML process (and is not performable in human mind) and is thus inherent in computing technologies. The trustworthiness qualification or quantification may be included as part of the data curation above to enable trusted human learning and autonomy. Such trustworthiness qualification or quantification is essential for data usage in trusted human learning and autonomy particularly in the MDO environment.

## Improving ML Search via Expert Labeling

*Context*

Machine and statistical learning methods (ML/SL) at large perform a search operation, given limited samples in some feature space, and find a transformation in a functional space which maximizes or minimizes a goal metric. For any particular model, Artificial Neural Network (ANN), Support Vector Machine (SVM), Decision Tree (DTREE), etc., this goal remains constant. The difficulty of the problem scales with the complexity of the feature space (see below, with respect to "curse of dimensionality"), and with the complexity of the function space (see below with respect to the description of hypothesis space) being searched. Additionally, the problem's difficulty is dependent on the ability to specify a sufficiently representative goal metric (see below with respect to goal specification). The data transformations in the MSWE disclosed herein handle all three axes of difficulty and help:

1. Reduce feature space complexity by providing compressed representations of the feature space without significant loss of information through expert annotation of events and objectives.
2. Reduce the functional search space by providing feature importance and decision boundary direction for representative exemplars and additionally decrease the minimum distance between the function space being searched and the true function.
3. Limit goal specification error by periodically querying the true objective function directly (commanding officer/-user/expert) instead of a surrogate objective.

Example aspects related to formal learning goals are further described below. For example, a policy function may be referred to as $\pi$ with $n_\theta$ parameters $\theta \in R^{n_\theta}$ given data $X$ with feature dimensions d and a number of samples $n_x$. The objective of a learning algorithm may be to find $\theta^*$ that maximizes a true objective function $g^*(\pi_\theta)$ based on a human-supplied surrogate objective $g(\pi_\theta)$ over the data $X$. The term policy may be borrowed from the reinforcement learning space as a function that transforms state information from an environment into an action.

Example aspects of difficulty with dimensionality (referred to as Curse of Dimensionality) are described below. The term curse of dimensionality refers to the fact that the number of data points $N$ required to achieve a certain density $\rho$ of points in $d$ dimensional space is $N \approx \rho^d$. In other words, naive data requirements scale exponentially with the number of dimensions of a candidate feature space. The density, $\rho$, is largely determined by the learning problem's requirements for safety, certainty, or validation. The dimension, however, is dependent upon data representation. Feature extraction / compression methods such as Principal Component Analysis (PCA), Independent Component Analysis (ICA), Variational Auto-Encoders (VAE), Generative Adversarial Neural Networks (GANs), Convolutional Neural Network (CNN) encoders, and many others aim to leverage structure to transform data from raw input dimension $d_r$ into a compressed representation $d_c$. If $X$ is compressed without loss of information, then the ratio of true data requirement to naive is $\rho^{dC - dC}$.

The presence of expert labeling for attributes of the feature space constitutes an act of nearly lossless data compression, which simultaneously provides a supervised dataset for automated data compression algorithms and a simpler feature space from which to learn a policy function. Modern semi-supervised learning methods such as CURL or DreamerV3 approach the sample efficiency of vectorized state representations for Atari and control environments at the cost of significantly greater computation, but it is unclear whether these methods can generalize well to multi-agent settings due to the unpredictability inherent in other-agent behavior. Further description is provided below with respect to hypothesis space.

Further aspects related to Hypothesis Space, Probably Approximately Correct (PAC), and Clustering are described below.

For PAC learning, functions are drawn from a hypothesis class H with the goal of bounding the number of samples m required for a learning algorithm to be correct within some error $\varepsilon$ above some probability p. The question is how many samples does it take for a learning algorithm to probably be approximately correct, The classic bound for a hypothesis with the Vapnik- Chervonenkis dimension (VCdimm) V(H) may be given by Equation 1 below, where VCdimm refers to the number of points with arbitrary binary labels that a given classifier can separate. A linear classifier can classify $d + 1$ points for a feature space with dimensions $d$. An algorithm learning the probability of a biased coin with zero input dimensions would have $V(H) = 1$ where the desired error from true probability can be bounded by PAC learning.

$$m \geq \frac{1}{\epsilon} \left( \mathcal{V}(\mathcal{H}) \ln \frac{1}{\epsilon} + \ln \frac{1}{1-p} \right) \qquad (1)$$

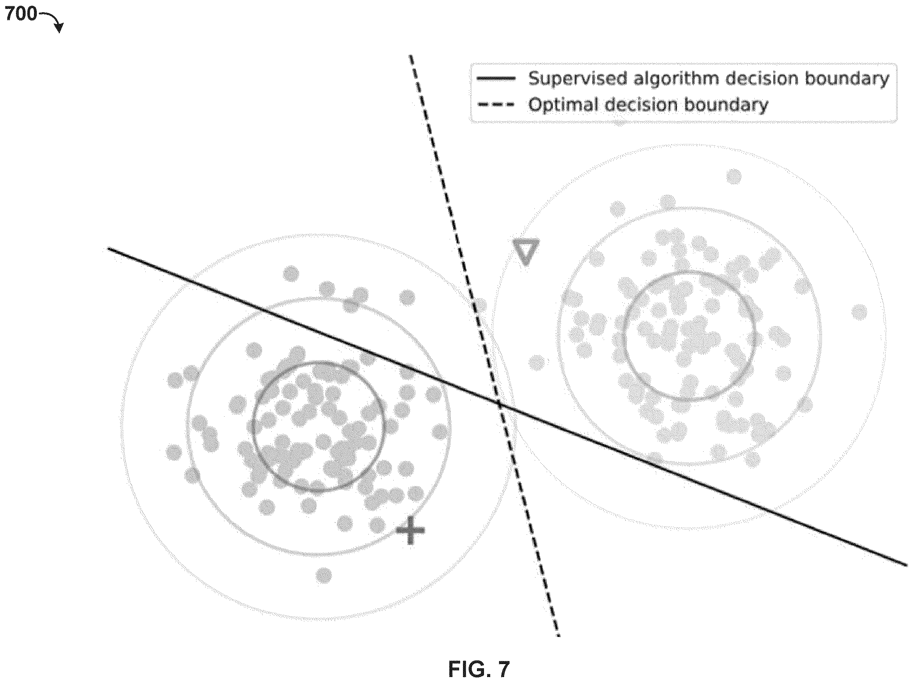

While this equation will produce vacuous bounds for modern-day deep learning approaches, especially those with continuous function output, the key insight here is that the data requirements scale with the complexity of the function class and required performance guarantees $\varepsilon$ and $1 - \delta$. A function, $\pi$ with parameters $\theta$ scales in learning capacity and data requirements as $n_\theta$ grows because $n_\theta$ determines the size of a search space H. The example depicted in diagram 700 in Fig. 7 illustrates the role of data volume in constraining the set of feasible functions in H. As more samples are drawn, the possible function space, or hypothesis space, decreases as the range of parameters which could correctly classify the maximum number of points decreases.

The semi-supervised data compression and feature extraction methods mentioned above with respect to the curse of dimensionality aim to augment the dataset by reducing the dimensions of data, or to force a classifier towards the line of best separation (in the case of VAEs and SVMs) by artificially augmenting the data (increasing m). This approach can fail if certain assumptions are violated. Namely, that the underlying distribution of data points contains some information about the class of those data points. Three assumptions are common to data augmentation approaches, but they may be broken in many policy learning cases when applied naively, and that expert labeling can repair instances where clustering assumptions fail. These assumptions are:

1. Smoothness: Nearby data points should share the same label. With continuous output this would be similar to Lipschitz continuity where nearby data points cannot cause an arbitrarily large shift in output/label magnitude.
2. Low Density: The decision boundary should pass through low density regions of space (rather than near the cluster centroids where data is common)
3. Manifold: Data points exist on lower dimensional structures called manifolds, and data points on the same manifold share the same label.

Example aspects related to smoothness and low density are further described below. Euclidean distance in the feature space of agents may be a very poor metric in reinforcement learning, as shown by recent works aiming to learn more appropriate feature embeddings. To illustrate the problem, imagine two human agents on opposite sides of the center of a 100m chain link fence. If the feature space includes the agent's positions and what they can each see, it looks like similar scenarios. The scenarios are close according to Euclidean distance. If there happen to be hungry wolves on one side of the fence, then the scenarios are not similar at all. Therefore, generating artificial data where an agent appears within 5m of the real observed data point will lead to serious problems. It may be desired to generate semi-supervised samples that the agent can use, like in CURL, to help meet some of the data requirements posed by PAC learning by increasing m. In an environment with pivotal events (second phase data contextualization) a data point which differs only in the feature corresponding to a labeled event but with all else held constant, looks very close from a Euclidean distance perspective to data points with decidedly desired behavior by definition (e.g., fence and wolves scenario). The weight that specific features hold in conceptual "scenario similarity" space varies greatly depending on the current state. Expert event labeling constitutes a clear contrastive signal because the expert would not have labeled the event if the desired decision would not change based on that event. The expert label such as "Agent should hop the fence because they are on the same side as the wolves" may provide a supervised data point on what to do, but it may also guide artificial data generation by providing the fence as the cut-off between positive and negative examples.

To summarize, smoothing and density assumptions relax the data requirement on machine learning because they limit the number of candidate policy function decision boundaries. This reduces the learning data burden, which is highly desirable, especially in complex cases. Semi- supervised augmentation for agentic problems may not be naively applied because distance in the true causal space is not defined by input features in these problems. An expert label of an important event, especially including which features make it important, constitutes a distance metric for that local area of the feature-space which allows for safe data augmentation. For example, an expert might label that an aircraft should abort because a previously unidentified Anti-Air asset was discovered. The states before and after the discovery are a clear contrastive example of when and when not to retreat. If the Anti-Air asset is included in the label as the reason for the change in behavior, then artificial data is more-likely safe to generate along all other dimensions of the feature space. Otherwise, the expert would have also included those dimensions in their data labeling.

Example aspects related to manifolds are further described below. It may be argued that expert label features constitute a lower-dimensional space in which the resulting manifolds are chosen specifically not to violate assumption 3 above. It may be asserted that if the target function is a policy, and a feature would change the decision making of the expert, then the expert will not destroy that feature when asked to summarize the important aspects of a particular data point. Consequently, the expert compression is not lossy with regards to the relevant structure for decision making. Additionally, when asked to contextualize data (e.g., what was the mission; what is the agent's role; what is the level of risk?). The expert is adding data dimensions that are instrumental to the inner structure of the decision-making. In other words, data which is missing contextual information is destroying the underlying structure by causing points which should exist in separate manifolds (separated by context) into a single manifold. In such a case the learning algorithm is being tasked to learn a very complex decision boundary along a dense region of space which violates all of the clustering assumptions and likely the learning algorithm's assumptions. If it cannot separate the data, then it will have to marginalize out that feature effectively taking the average behavior which can be problematic for behavior choices separated by distinct categorical boundaries in the domain (e.g., what is the meaningful behavioral response which is the average of retreat and not retreat?).

Aspects of goal specification by imitation and RL are further described below. Referring back to the description about formal learning goals above, it is noted that there exists a true objective, $g^*(\pi_\theta)$, and a human-specified objective $g(\pi_\theta)$. In the supervised learning case, the specified objective is classification or regression loss over a particular dataset, where the true objective is the loss over all possible data points that could have been in that dataset, weighted by their likelihood of appearing. There is some error $\varepsilon_{obj} = g^*(\pi_\theta)\text{-}g(\pi_\theta)$ between the true objective and the measurable objective functions which should decrease as the sampled set grows to become more representative of the true data generator / population. In the case of behavioral learning, human policies are not perfect. So, sampling more human data approaches a suboptimal (even if only slightly) policy. Here, with respect to techniques such as sub-sampling, only the most successful examples or expert labeling of negative contrastive examples are desirable to meet or surpass human performance. In the case of reinforcement learning, the problem is arguably even worse because the reward function $R := S \times A \to R$ from each state-action pair is only an approximation of desirable behavior for an agent, and it is defined by a goal which may or may not be dynamic. In this case, more data does not cause $\varepsilon_{obj}$ to shrink. This is where contextual data labeling is needed. The game plan, acceptable level of risk, and information about teammates, in the case of multi-agent RL, are all feature dimensions upon which decision boundaries must be made and rewards must be conditioned. If a reward function cannot be supplied, then a post-hoc analysis of behavior given by expert feedback would constitute the closest approximation to a true reward function for $g^*$.

To summarize, the true objective function $g^*(\cdot)$ when learning a policy $\pi(s, obj, l_{risk}, ...)$ parameterized by $\theta$ is defined by the current objective and contingent upon context such as acceptable level of risk, role information, and mission plan. In the imitation or inverse RL setting, $\pi(s)$ is under-parameterized without access to the contextual labels but $g(\pi_\theta, obj, t_{risk}, ...)$ may be close to $g^*(\pi_\theta, obj, l_{risk}, ...)$ depending on the quality of the human behavior. In the case of reinforcement learning, a reward function without contextual labels leads to an under-parameterized and missspecification $g(\pi_\theta)$ while a reward function with contextual labels risks only missspecification, and a direct line to post- hoc expert feedback risks neither, but it is based on the expert's understanding of bet-behavior.

Example aspects of goal specification for active learning/RLHF are further described below. When learning from an offline dataset, there may be an out of distribution (OOD) error caused by the fact that the scenarios seen in the data were not generated by the policy that is currently being learned. Even in the behavioral cloning (BC) supervised case, it can be shown that a small error in policy approximation or a slightly unfamiliar state will cause an agent to move slightly differently than the policy being cloned, which forces it into a likely less familiar state where it moves more unpredictably in a compounding error cycle referred to as covariate shift. Offline RL methods address this by constraining the policy towards familiar space and actions. What would be better is to get an online reward signal, or online training examples for the current policy which would be unbiased. Online RL algorithms like policy gradient-based learning require that data be online to serve as an unbiased estimator. Some example intermittent expert action labels may be used in order to correct for covariate shift. In a similar way, modern LLMs shift from offline learning to human feedback through first Reinforcement Learning with Human Feedback (RLHF) and later optimizations Direct Policy Optimization (DPO) and Group Relative Policy Optimization (GRPO).

As such, an online expert ground truth label (for actions imitation learning) or reward signal (for harder to specify "perfect action" scenarios) offers a way to tune models towards human preference, which is often the best signal available for unsolved tasks. When the objective being maximized is to follow a command or meet a request, there is no truer signal than the feedback of the person who requested action in the first place.

Example aspects for accounting for expert error are described below. Mean squared error (MSE) from ground truth labels $l_{mse} = (x - \hat{x})^2$ or from a ground truth reward signal in RL $l_{bellman} = (r + \gamma V_{t+1} - V_t)^2$ may be based on the least-squares framework which produces an unbiased, minimal variance estimator when error is independent and identically distributed with mean-zero as stated by the Gauss-Markov Theorem. With multiple experts, this assumption is broken based on individual labeler experience and skill level. The example implementations disclosed herein use meta-data attached to the expert sources of labels as a way to estimate a weighting of samples based on the distribution of errors produced by their expert. In a perfect world, the variance and bias of each expert's labels would be known from a consensus ground truth, such as an exam, so that their labels could be re-normalized by $x_{new} = (x - \beta_{expert})\sigma_{expert}$ and so that standard MSE loss functions would again provide a minimal variance unbiased estimator because all samples would share unit variance. Subtracting $\beta_{expert}$ meets the mean zero assumption while dividing by $\sigma_{expert}$ meets the homo-skedasticity assumption. With enough aggregate expert data, such a function may be learned as its own model by linear regression or otherwise. Without enough data to learn a model of sufficient accuracy, other metrics may still be used, which are assumed to correlate with expert label variance such as years of experience or training on a particular task being labeled. These surrogate scores $s_{expert}$ can be used as a replacement or predictor variable for labeler variance via the feasible generalized least squares (FGLS) framework via $x_{new} = x * 1/s_{expert}$. The exact normalizing equation would be refined empirically on an application specific basis, but the effect is to create a more uniform variance of data among experts.

$$l_{new} = \sum \frac{1}{\hat{\sigma}^2_{\text{labeler}}} \left( x - (\hat{x} - \hat{\beta}_{\text{labeler}}) \right)^2 \qquad (2)$$

Weighted loss given an estimated bias and variance of the labeler in the supervised case can be seen in Equation (2). If there is no direct estimate for $\sigma$, labeler would be used as weights for weighted least squares instead of $1/\sigma$. For the bellman update, weights can be applied naively as in weighted experience replay, but distributional RL, such as IQL and C51, already estimate variable variance in addition to mean values. So, more care must be taken to separate aleatoric uncertainty of the environment from epistemic uncertainty from labeling.

*Formal Specification*

As described above, the goal is to find $\pi^*$ parameterized by $\theta^*$ that maximizes some performance function called $g^*(\pi_\theta, \text{context})$ which depends on the current context such as mission objective, mission plan, level of risk, or teammate information. The post-hoc expert analysis of behavior quality is the closest approximation of g* with some error in Equation (3):

$$\epsilon_{\text{post-hoc}} = g_{\text{post-hoc}}(\pi_\theta, \text{context}) - g^* \qquad (3)$$

Human behavior imitation loss such as $l_{human} = (\pi_{human} - \pi_\theta)^2$, augmented in the description above, and filtered by expert review, offers a signal towards a likely second closest approximation of g*, in Equation (4):

$$\epsilon_{\text{clone}} = g_{\text{clone}}(\pi_\theta, \text{context}) - g^* \qquad (4)$$

A human-specified reward function, or inverse RL discovered reward offers the third approximation in Equation (5):

$$\epsilon_{\text{rl}} = g_{\text{rl}}(\pi_\theta, \text{context}) - g^* \qquad (5)$$

Finally, there is some error induced by the function class and searching ability of the learning algorithm on $\pi_\theta$ which keeps it from $\pi^*$ seen in Equation (6).

$$\epsilon_{\pi_\theta} = g^*(\pi_\theta, \text{context}) - g^*(\pi^*, \text{context}) \qquad (6)$$

It may be argued that the problem in a multi-domain socio-technical work environment (MSWE) is ill-defined without the first round of contextual labels and in other domains this context would be considered a part of the state space and omitted so it is not tracked as an error.

Finally, there may be an approximation error induced by the lack of context if contextual labels are not included. Note that g* will always include context because it is the optimal behavior given the true state of the world without concern for computational tractability or any other engineering challenges and so the error for omitting this context is seen in Equation (7).

$$\epsilon_{\text{context}} = g^*(\pi_\theta, \text{context}) - g(\pi_\theta) \qquad (7)$$

The computational cost scales with the function class complexity H determined by the number of parameters of the model $n_\theta$, dimensions of the feature set d, and the certainty/data density requirement $\rho$. Human annotation can extract features to be trained on, as in supervised image recognition, which compresses the relevant feature dimension d to $d_{\text{compressed}} \le d$. Under the curse of dimensionality view, data augmentation may allow for a reduction in data density requirement $\rho$ by some task-dependent factor, $0 \le c \le 1$ where expert contextual labels decrease c as augmented data is generated only where the clustering assumptions hold. It may be claimed that c is a linear factor under the assumption that every real data point $x \in X$ allows for some number of fake data points $z \in X$ to be generated without damaging the resulting decision boundary. It may be argued that $\varepsilon_{\text{post-hoc}} \approx \varepsilon_{\text{clone}} \approx \varepsilon_{\text{rl}} \approx \varepsilon_{\pi\theta} << \varepsilon_{\text{context}}$. When running a learning function, some error from the maximum of the surrogate function g referred to as $\delta$ may be experienced. It may be claimed that scales with the Equation (8) from the PAC and dimensionality literature where $H(d_{\text{compressed}}, \theta\theta)$ is the function class complexity arising from the data dimension and policy parameterization.

$$\delta \propto (c\rho)^{\mathcal{H}(d_{\text{compressed}}, \theta)} \qquad (8)$$

The final objective is then to minimize Equation 9.

$$\text{total error} = \delta + \epsilon + \epsilon_{\text{context}} + \epsilon_{\pi_\theta} \text{ where } \epsilon \in \{\epsilon_{\text{post-hoc}}, \epsilon_{\text{rl}}, \epsilon_{\text{clone}}\} \qquad (9)$$

It may be claimed that goal-oriented and mission context labels decrease $\varepsilon$context while more expressive models increase $\delta$ while decreasing $\varepsilon_{\pi\theta}$ (the bias variance trade-off). Expert feature extraction reduces $\delta$, and expert labeling of events and decision boundaries decreases c, thereby decreasing $\delta$. Expert boundary examples also decrease $\varepsilon_{\text{rl}}$ if they are used as supervised exemplars in conjunction with a reward function under the assumption that post hoc analysis is more accurate than a predetermined reward function. The post hoc error $\varepsilon$post-hoc is reduced by expert meta-data present at the time of labeling as described above. Expert feedback is also capable of reducing $\varepsilon_{\text{rl}}$ by providing a supervised subset of samples for inverse reinforcement learning or by providing online rewards for the value function itself in RL via RLHF which is also reduced by meta data as described above. Finally, subjective expert analysis on the quality of behavior decreases as well by supplying contrastive examples instead of wasting them. It may be finally noted that samples drawn from reinforcement learning are by far the cheapest monetarily, so $\delta$ for RL will likely be smaller than for supervised learning in rare or under-represented cases in exemplar datasets. Conversely, the reward signal is not as constraining of the function space as a supervised signal, so $\delta$ is likely smaller for imitation approaches in common scenarios. This understanding is why behavior cloning or imitation learning is recommended whenever possible with RL serving to fill in the function space where there is no sufficient data to get the best from both paradigms.

**Further Detailed Embodiments for Hierarchical Data Contextualization and For Utilizing Contextualized data for Human Learning and Machine Learning for ATT**

In the example embodiments further disclosed below, a platform introduced into an MSWE that is capable of taking actions and making decisions, whether human, AI/ML model, or otherwise, may be referred to as an agent. An agent may refer to a machine, or a portion of a machine responsible for a particular function. The space in which various agents of the MSWE act may be referred to as an environment. A current representation of a configuration of the environment, such as the locations/speeds/identities/other attributes of all agents, may be referred to as a current state of the environment. A current state becomes a historical state with the passage of time.

As described above, an agent may not be exposed to the entire current state of the environment. In such a case, the part of the state that an agent can see/perceive may be referred to as its observation. The behavior pattern that an agent follows given the state or that agent's observation, depending on observability of the environment, may be referred to as agent's policy or policies. The policy or policies which maximize some objectives (e.g., group objectives) in an environment may be referred to as an optimal policy, and if an agent (either human or autonomous) is trying to learn a particular policy in a mission training process, then that particular policy may be referred to as a target policy. The target policy and optimal policy for an agent need not be the same. For instance, in the battlefield example, an agent may be given the enemy's policy as a target policy of the enemy to serve as a good training partner despite the fact that the enemy policy is not necessarily optimal.

In RL, an optimal policy may refer to the policy that leads to the highest expected reward in an environment where reward refers to a measure of the score or the goodness of performance. Sometimes rewards can be generated by human feedback like a user review of a service and other times rewards are generated by a predetermined function. In the example MDO environment of a battlefield, an agent can be an autonomous aircraft, a satellite, a human operator, a ground vehicle, or other entity capable of taking actions, and a reward function might include a measure of adherence to the mission plan or the efficiency with which objectives were achieved.

The detailed example embodiment below implements the hierarchical and eventbased data contextualization as part of the data curation process such that the data are contextualized and formatted in various levels for enabling training and testing of embedded MSWE autonomy at the different levels (individual agent level, single domain level, and other higher levels as described above). The disclosed example embodiments provide a system, method and computer program, among other things, to collect and contextualize individual and decision-level data to drive the processing and training of next-generation AI/ML models suitable for MSWE (such as an MDO), where advanced autonomy and AI applications are desired. Therefore, some embodiments have the capacity to improve the field of data contextualization by implementing hierarchical contextualization for generating multi-level contextualized data sets for adaptive usage in training and enabling, at various levels, autonomous control of complex MSWE systems for which a robust data set does not exist. In other words, the system, method, and computer program described herein may allow a computer to use a hierarchical model that may be traceable and may deterministically interpret commander intent while remaining flexible as the current state of the environment evolves.

As described above, current data collection approaches in MSWE are focused mainly on testing and validation of physical devices or individual domain analysis that lack any contextual information to learn from. Within a military MDO, aircraft, satellites, and other objects in the battlefield environment, these data collection approaches and programs include the ingest of sources such as platform Time-Space Position Information (TSPI) data, satellite Two-Line Elements (TLE), and other intra/extra vehicle sensor and instrumentation data. However, attempts to actively save and store military testing and training information are nearly absent, meaning there exists a culture of deleting most information immediately after mission debrief. Conversely, in autonomous vehicle training outside of military applications, commercial companies have spent billions of dollars over the past several years focused on massive-scale telemetry and multi-modal sensor data gathering for model training. However, in the non-military cases where data sets are abundant, basic driving decisions under low-uncertainty or surprise continues to elude the most advanced systems.

It may be advantageous, therefore, to adopt a hybrid approach to curating and contextualizing data for machine learning applications that combines highly contextualized human subject matter expertise with autonomous data labeling for MSWEs. Again, context labeling of such training data is critical because without such context labeling, these data would be fundamentally ineffective in training hierarchical and adaptive autonomy at the agent level and higher levels of the MSWEs due to the multi-domain nature and the complexity in the environment dependency of the agent's and commander's action in optimizing group goals. The disclosed training data curation/contextualization implementations further provide for automatic label generation as a means of alleviating the issues associated with the small population of experts that can provide meaningful contextual labels or attributes to the training data. Example manners in which the training data are used to generate meaningful autonomy models are also provided. Such an approach may be used to train next-generation reinforcement learning, imitation learning, or other deep-learning model architectures in environments where there is both limited available data and limited skilled experts for context labeling, critical for advanced applications ranging from the design of mission-centered tactical autonomy supporting MSWE, to commercial applications such as advanced strategy analytics in sporting events that provide insights into complex models and high-level decision making.

The data curation/contextualization method, computer system, and computer program product disclosed herein may support contextual data aggregation that is suitable for high-risk and complex decision-driven environments (i.e., military domains, space mission control, disaster response, professional motor racing) and human data curation/contextualization followed by AI/ML assisted data preprocessing to meet the scale and data format requirements demanded by AI/ML algorithms for autonomous system training. The training pipeline and ML training techniques may allow for human-compatible decision-centered AI/ML by providing for training paradigms and families of algorithms and models.

In one or more implementations, an example training data curation procedure may include first collecting contextual MSWE domain knowledge from human subject matter experts along with sample MSWE exercise data in hierarchical phases from the perspective of different domains (e.g., warfighting domains) into a shared data model, as described above. Next, contextual labels may be supplied that may include mission plan / brief and post hoc expert comments on *in situ* mission execution. Then the aggregated data and human contextual labels may be pre-processed into machine readable format to use as input for AI/ML model training. The mission debrief information and expert feedback and comments may be processed as information on the learning objective for a candidate machine learning autonomous system. The machine-readable version of the expert comments may also be treated as a supervised learning objectives in order to artificially expand the amount of labeled data available for training autonomous systems as is done in semi-supervised learning.

As further described below, a pipeline for training an actual autonomous system using a combination of offline human-curated and artificially extended dataset may be outlined, along with an online RL fine-tuning step for robustness when faced with scenario novelty. Given the unique requirements of learning from both demonstration data and rewards in both an online and offline format, the search of modem candidate ML algorithms may be narrowed to those that can currently be applied to all steps in the pipeline.

It may be appreciated that although some MSWE implementations discussed herein may be described with a focus on military MDO as it would relate to tactical AS, the method, computer system, and computer program product described herein may be used in any similarly complex domain with a relatively small population of experts and limited data availability.

The method, computer system, and computer program product disclosed herein may use algorithms in the family of actor/critic components, with a value decomposition network for controllers which rely on shared objectives and must coordinate. For an individual agent's behavioral contract controller, actor critic is chosen because it consists of both a policy and a value network. The policy can be constantly constrained to human behavior through imitation learning or behavior cloning form the human curated dataset. The critic can be initialized by offline RL on the human data as well before being exposed to a simulation for online RL training. This way, value functions can also be learned offline for human operators for use with a promising paradigm in multi-agent learning. Examples would be the mixing network used in multi agent soft actor critic, such as a value decomposition network.

Aspects are described herein with reference to flowchart illustrations and/or block diagrams of methods, apparatus (systems), and computer readable media according to the various embodiments. It will be understood that each block of the flowchart illustrations and/or block diagrams, and combinations of blocks in the flowchart illustrations and/or block diagrams, can be implemented by computer readable program instructions.

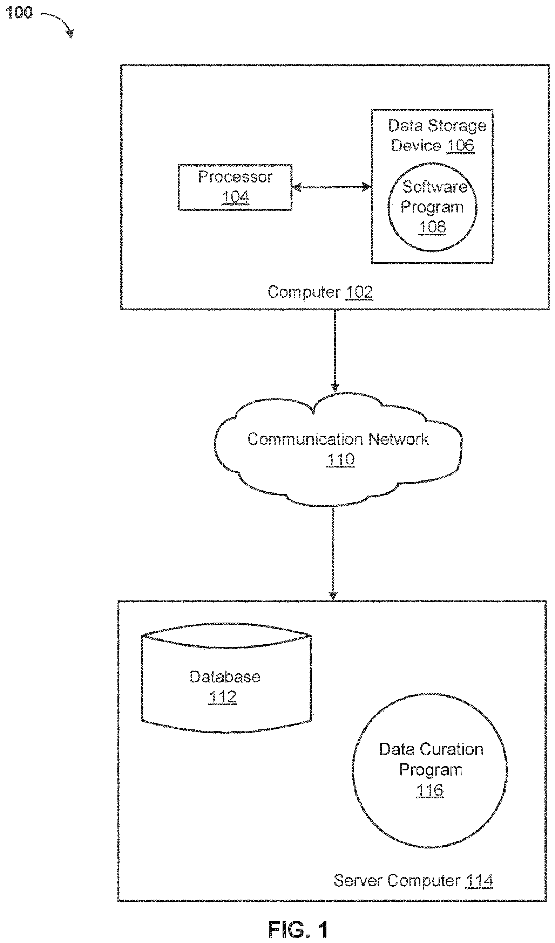

The following described exemplary embodiments provide a system, method and computer program that collects and curates data in a multi-domain operation environment. Referring now to FIG. 1, a functional block diagram of a networked computer environment illustrating a multi-domain operation system 100 (hereinafter "system") for data collection and curation. It should be appreciated that FIG. 1 provides only an illustration of one implementation and does not imply any limitations with regard to the environments in which different embodiments may be implemented. Many modifications to the depicted environments may be made based on design and implementation requirements.

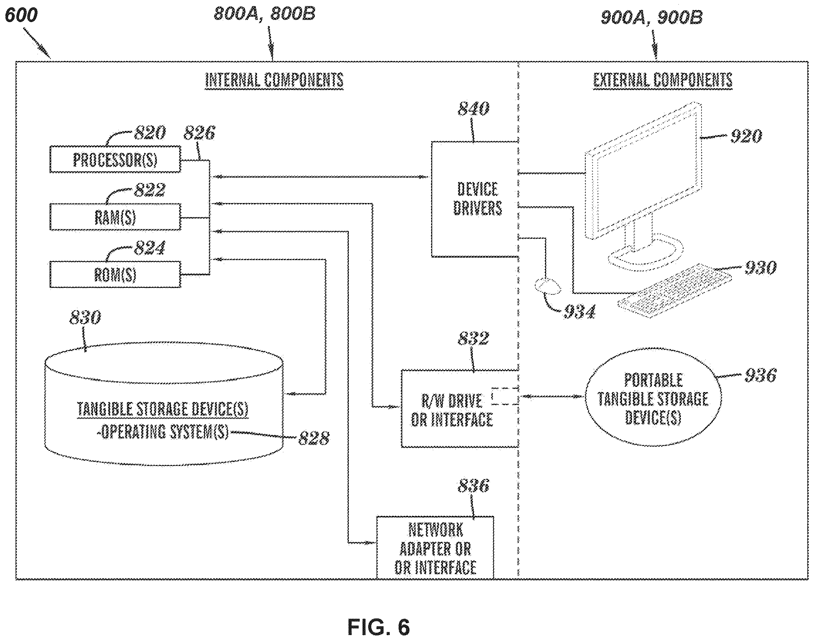

The system 100 may include a computer 102 and a server computer 114. The computer 102 may communicate with the server computer 114 via a communication network 110 (hereinafter "network"). The computer 102 may include a processor 104 and a software program 108 that is stored on a data storage device 106 and is enabled to interface with a user and communicate with the server computer 114. As will be discussed below with reference to FIG. 6 the computer 102 may include internal components 800A and external components 900A, respectively, and the server computer 114 may include internal components 800B and external components 900B, respectively. The computer 102 may be, for example, a mobile device, a telephone, a personal digital assistant, a netbook, a laptop computer, a tablet computer, a desktop computer, or any type of computing devices capable of running a program, accessing a network, and accessing a database.

The server computer 114, which may be used for data collection and curation in a multi-domain operation environment is enabled to run a Data Curation Program 116 (hereinafter "program") that may interact with a database 112. The Data Curation Program method is explained in more detail below with respect to FIG. 6. In one embodiment, the computer 102 may operate as an input device including a user interface while the program 116 may run primarily on server computer 114. In an alternative embodiment, the program 116 may run primarily on one or more computers 102 while the server computer 114 may be used for processing and storage of data used by the program 116. It should be noted that the program 116 may be a standalone program or may be integrated into a larger data curation program.

It should be noted, however, that processing for the program 116 may, in some instances be shared amongst the computers 102 and the server computers 114 in any ratio. In another embodiment, the program 116 may operate on more than one computer, server computer, or some combination of computers and server computers, for example, a plurality of computers 102 communicating across the network 110 with a single server computer 114. In another embodiment, for example, the program 116 may operate on a plurality of server computers 114 communicating across the network 110 with a plurality of client computers. Alternatively, the program may operate on a network server communicating across the network with a server and a plurality of client computers.

The network 110 may include wired connections, wireless connections, fiber optic connections, or some combination thereof. In general, the network 110 can be any combination of connections and protocols that will support communications between the computer 102 and the server computer 114. The network 110 may include various types of networks, such as, for example, a local area network (LAN), a wide area network (WAN) such as the Internet, a telecommunication network such as the Public Switched Telephone Network (PSTN), a wireless network, a public switched network, a satellite network, a cellular network (e.g., a fifth generation (5G) network, a long-term evolution (LTE) network, a third generation (3G) network, a code division multiple access (CDMA) network, etc.), a public land mobile network (PLMN), a metropolitan area network (MAN), a private network, an ad hoc network, an intranet, a fiber optic-based network, or the like, and/or a combination of these or other types of networks.

The number and arrangement of devices and networks shown in FIG. 1 are provided as an example. In practice, there may be additional devices and/or networks, fewer devices and/or networks, different devices and/or networks, or differently arranged devices and/or networks than those shown in FIG. 1. Furthermore, two or more devices shown in FIG. 1 may be implemented within a single device, or a single device shown in FIG. 1 may be implemented as multiple, distributed devices. Additionally, or alternatively, a set of devices (e.g., one or more devices) of system 100 may perform one or more functions described as being performed by another set of devices of system 100.

Moving to the collection/curation/contextualization of decision-level data to drive the processing and training of next-generation AI/ML models suitable MSWEs, where advanced autonomy and AI applications are desired, an example military training data hierarchical curation/contextualization procedure may include first collecting contextual MDO mission knowledge from human SMEs along with sample MDO exercise data from the perspective of different domains (e.g., warfighting domains) into a shared data model (e.g., the first phase described above). Next, contextual labels/attributes may be supplied that may include mission plan / brief and post hoc expert comments on *in situ* mission execution at various levels (e.g., the second through final phases described above). Then the aggregated data and human contextual labels may be pre-processed into machine readable format to use as input for AI/ML model training. The mission debrief information and expert feedback and comments may be processed as information on the learning objective for a candidate ML or AI task (e.g., TAA). The machine-readable version of the expert comments may also be treated as a supervised learning objective in order to artificially expand the amount of labeled data available for training autonomous systems as is done in semi- supervised learning.

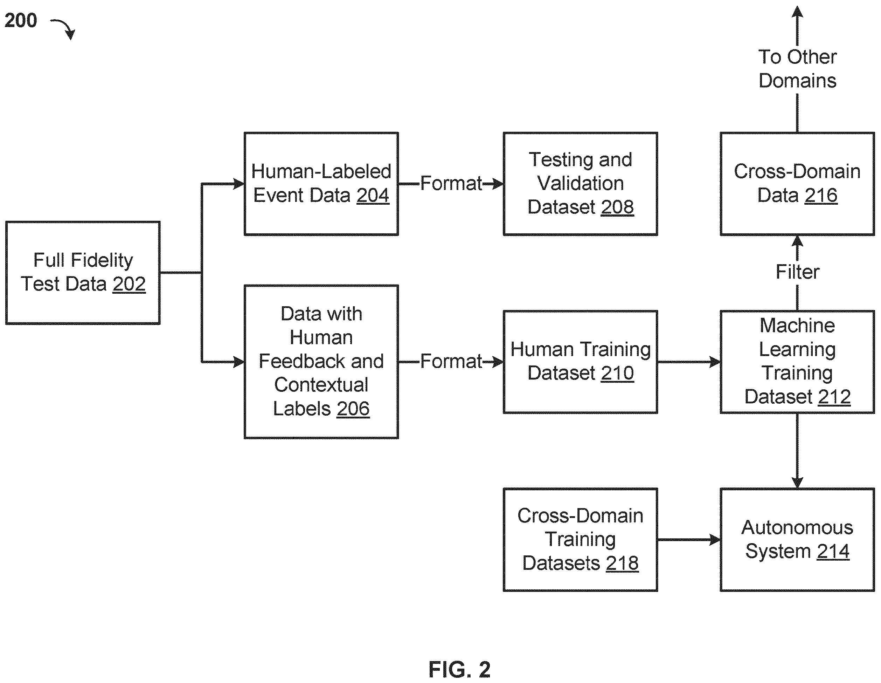

Specifically, referring now to FIG. 2, a block diagram of such a data curation pipeline 200 is depicted according to one or more example embodiments. For more diverse MSWE applications, cross-domain data sources (e.g., cross different types of agents) may need to be integrated to support more effective AI/ML training that captures the coordination required in effective joint operations. Accordingly, the pipeline 200 may be used within one domain but may interact with similar pipelines 200 for other domains. For each given domain, full-fidelity test or mission (or exercise) data may be captured. This data may be labeled by a human expert associated with the mission or test with event data, feedback, and contextual labels. The contextual data together with the mission data may be used to generate a training dataset that may be fed into a ML training process for training an MDO AS. Such data may be filtered for use in cross-domain applications as described in further detail below.

For example, AS may need to synchronize with kinetic and non-kinetic effects and weapons events sourced from all involved military domains to be effective. As a result, all of these effects need to be represented and contextualized. In the battlefield MDO context above, if an aircraft must fly in a particular area because of a military effect disabling an enemy integrated air defense system (IADS), then an autonomous system trained to support that aircraft will have its target function critically under-specified if not trained to understand the cross-domain dependencies.

Due to security concerns of aggregating need-to-know data from a variety of different organizations, the data may need to be filtered to contain only effects instead of capabilities before being aggregated and sent cross-domain. For instance, the capability, or the details of how a space effect disables enemy IADS may be highly classified, but the fact that it disabled a component of an IADS in a previous mission may be encoded at a lower classification level without revealing specific capabilities before being sent cross domains. Data must thus be filtered before being aggregated in the same way that personally identifiable information is removed from public medical training datasets. Before being filtered for integration, the data needs to have contextual labels attached for the training of a given domain's model which may have no problem seeing the higher-fidelity information within the domain.

**EP 4 730 206 A1**

Optimal behavior of any individual platform, human or otherwise, in an MSWE is completely undefined outside of the context of the relevant organization's mission objective/plan and agreed upon behavioral contracts (i.e., domain best practices) developed during mission planning and brief. Once collected, the mission objectives and behavioral contracts then need to be broken down into ML-interpretable data such that optimal behavior can be specified to an AS. This property is not unique to military operations. Pre-planned synchronized roles with adaptive task requirements to novel circumstances also appear commercially in managing and optimizing a logistical supply chain, medical surgical teams, disaster response scenarios, theatrical production, scientific or space exploration, and restaurant kitchens. In all of these scenarios, the variety and novelty limit the available volume of available training data for the overarching objectives while requiring synchronized pre-planned trainable sub-task behaviors between agents. An order in a restaurant specifies a mission plan with subtasks for prepping and cooking ingredients which must happen in an ordered and timely manner. Preferably, if a change is requested or an ingredient burned, an autonomous assistant would be able to be re-tasked seamlessly by a high-level verbal command just as a fighter pilot or tank driver may want to re-task their autonomous support agent to address a new threat.

In addition to performance constraints, the inclusion of human feedback may help to specify opaque objectives such as acting human-like or comforting during disaster response involving children. Finally, in the military use case, post-hoc mission debrief contains human feedback for things that went well or poorly during mission execution including reasons why. This stage is critical for human learning and should be recorded rather than discarded as is often the case in current practice. This expert feedback can be used for many potential autonomous training improvements. Specifically in FIG. 2, full fidelity test data 202 or other mission data may be contextually labeled by human experts to generate contextualized human-labeled event data 204. The labeling by the human expert indicates contextual information that is not captured by the mission data (sensor data, instrument data, and the like). The contextual data may include free-form textual or speech or other context information collected in situ or during by a data collection platform or during debriefing following the mission by the data collection platform. Such contextual information may indicate the circumstances leading to the action decision making by the expert labeler (the human operator or others involved in the mission). Additionally, human feedback information may also be collected (such as whether the decisions made in the mission were sound or not and why). The mission data with human feedback and contextual labels 206 may then be formatted to generate the human training dataset 210. The formatting is critical because the diversity in the terms being used for contextual labeling and feedback, and potential differences across human expert labelers as described above. A unification of the lexicon and corresponding formatting of the contextual labeling and feedback information is critical particularly for the cross-domain data sharing aspect described in further detail below. The mission data and the contextual data may further be integrated to form the human-labeled event data 204, which may be further formatted to generate a testing and validation dataset 208 for validating trained models.

The training data may be further processed and combined with cross-domain training datasets 218 and used as AI/ML training dataset 212 to train a particular autonomous system 214 for an agent or a type of agents in a particular domain the full fidelity test data 202 is collected. The training of the domain AI/ML autonomy model may be performed via an iterative optimization process using the combined human training dataset 210 with in-domain contextual labels and cross-domain training datasets 218. The AI/ML training dataset 212 with in-domain training data may be further filtered to remove information that should not be shared between domains and sent filtered data as cross-domain data 216 to other domains for the training of the AI/ML models for autonomy in the other domains.

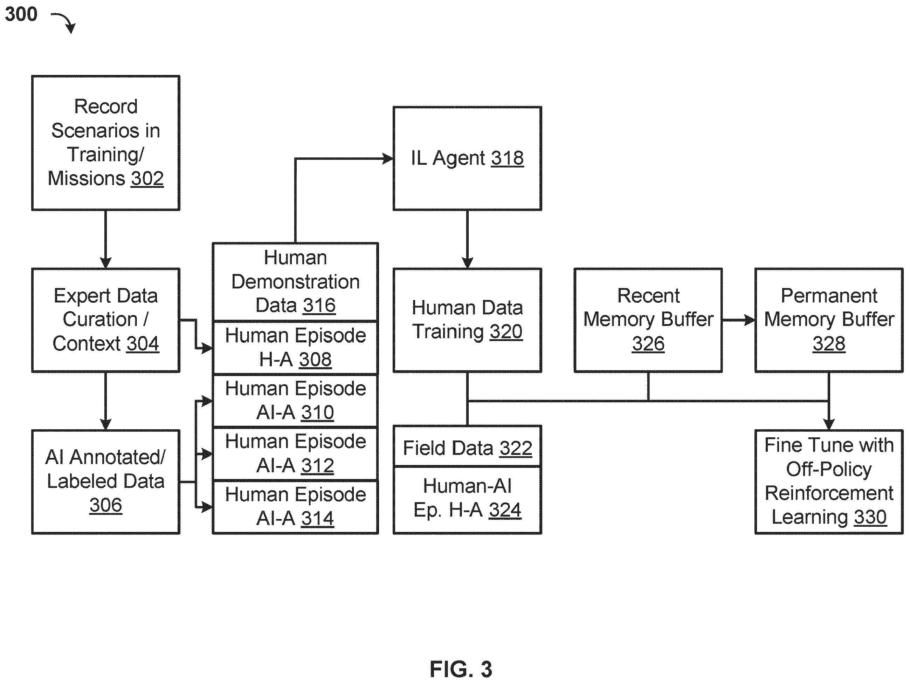

In some example implementations, the human expert labeling process described above may be expanded to use AI/ML based labeling to expand the datasets available for training. Referring now to FIG. 3, a block diagram of an example hybrid ML pipeline 300 is depicted according to one or more example embodiments. Scenarios from missions and training sessions may be recorded at 302, which may be used for expert data curation and context labeling according to the data curation pipeline 200 depicted in FIG. 2. The curated data may be fed into a ML trained model or other AI model for annotation/labeling generation of more mission data to allow for scalability and expansion of the generation of the labeled training datasets.

As further shown in FIG. 3, the expert data with human curation and contextual labeling 304 from the data curation pipeline 200 may be fed into a human episode H-A 308, and the AI-annotated/labeled data 306 may be fed into Human Episodes AI-A 310-314. Human demonstration data including the Human episodes H-A 308 and Human Episodes AI-A 310-314 may then be fed into an imitation learning (IL) agent 318 to allow the IL agent 318 to perform human data training 320 on human demonstration data 316. The IL agent 318 may be trained via multiple potential methodologies including imitation learning, offline reinforcement learning, or inverse reinforcement learning from a human curated and machine learning-extended dataset, such as field data 322 associated with Human-AI Episode H-A 324.

Thus, the data pipeline 300 may be used for collecting and annotating demonstration data with semi-supervised learning to augment the demonstration dataset, such as within recent memory buffer 326. In addition, an initial agent may be trained using imitation learning before being given access to an environment to explore usage of reinforcement learning. For episodes of particular interest, human feedback may be recorded and saved permanently in a permanent memory buffer 328 for fine-tuning with off-policy reinforcement learning with human feedback, as indicated by 330.

18

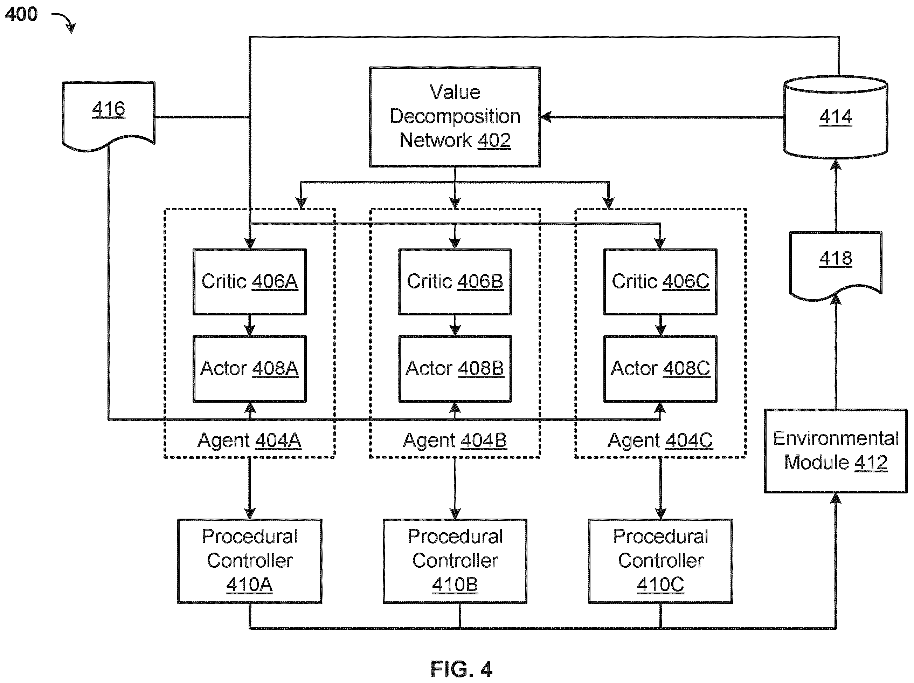

For simple tasks by the agents, such as transport of materials, the process of pipeline 300 may terminate here. For more complex tasks with limited data, high novelty, and coordination such as those observed within MSWE, a simulator may be used to train online reinforcement learning models with human demonstration regularization, such as described below in relation to FIG. 4. Such reinforcement learning models may be considered to have two simultaneous learning objectives: maximize reward in a simulator and agree with human behavior and feedback in all previously recorded instances. An optimal policy in RL may be defined as the policy that maximizes expected reward, but a policy discovered by RL may have no guarantees to be human-like, human-compatible, or even safe. By constraining the RL policy-search to choose from the subset of policies which align with human actions and human feedback, safety concerns can be more easily mitigated while RL covers the data scale concerns of imitation learning.

Referring now to FIG. 4, a block diagram of a multi-domain operation learning system 400 for data collection and curation in a MDO environment is depicted according to one or more embodiments. The multi-domain operation learning system 400 may include, among other things, a value decomposition network 402, one or more agents 404A-C, one or more procedural controllers 410A-C, an environmental module 412, and a memory 414.

The value decomposition network 402 may coordinate the agents 404A-C. The agents 404A-C may be, among other things, system or platform capable of taking actions and making decisions. The agents 404A-C may act within an environment, and a current representation of a configuration of the environment, such as the locations of the agents 404A-C may be a state. The agents 404A-C may not be exposed to the entire state, and a part of the state that the agents 404A-C can see is considered an observation.

The agents 404A-C may follow a behavior pattern, or policy, given the state or the observation of a given agent 404A-C, depending on observability of the environment. A policy that maximizes some objective in the environment may be an optimal policy, and the agents 404A-C may attempt to learn a target policy, which may differ from the optimal policy. For example, an agent 404A may be given an adversary's policy as a target policy for training against such a policy despite the fact that such policy may not necessarily be optimal. In reinforcement learning, an optimal policy may lead to a highest expected reward in an environment. In MDO environments, the agents 404A-C may be, among other things, an autonomous aircraft, a satellite, a human operator, a ground vehicle, or other entity capable of taking actions, and a reward function might include a measure of adherence to the mission plan or the efficiency with which objectives were achieved. The agents 404A-C should account for, among other things, several factors, such as, for example, a number or size of assets, time-sensitive coordination of varied capabilities, mission plan, intent adherence, credible threat replication, and operational security.

In one or more implementations, the agents 404A-C may be, among other things, soft actor critics that allow for autonomous decision-making in multi-domain operations. Each of the agents 404A-C may include a respective critic 406A-C and actor 408A-C. The critics 406A-C may correspond to Q function approximators, and the actors 408A-C may correspond to policy approximators. The critics 406A-C and the actors 408A-C may be, for example, deep neural networks. The actors 408A-C may learn both from rewards passed through the critics 406A-C and through direct demonstrations or interventions through imitation or reinforcement learning.

The agents 404A-C may be trained on human demonstration data and feedback to create robust and reliable AS through ML techniques such as imitation learning, offline RL, inverse RL, RLHF, Direct Preference Optimization, expert intervention data, active learning, and many other techniques. In one or more embodiments, the agents 404A-C may use, among other things, techniques including support vector machines, decision trees, random forests, logistic regression, k-nearest-neighbor, artificial neural networks, and the like. Each technique may be summarized as a different way to approximate a target function with an input and a desired output.

In one or more implementations, the agents 404A-C may be trained through one or more of offline demonstration data, human feedback, and online data via a simulator to coordinate with many agents simultaneously while also following behavioral contracts laid out in a mission plan. Within MDO there may be sub-goals or tasks that have unambiguous objectives but that may still be too difficult to specify optimal policies, and to program a policy by hand which addresses all of the possibilities may be intractable. Therefore, an objective for RL fine tuning could be encoded as positive rewards and negative rewards, the magnitude of which may depend on, among other things, a predefined acceptable level of risk.

The agents 404A-C may consider objective and subjective variables. Objective variables may include those which can be accurately measured or calculated, such as position and speed of entities in all domains, composition and total numbers of assets, and the timing of events in all domains. Subjective variables may include those events from the outcomes of the objective events that may sometimes use objective measures. Subjective variables may include target hit assessments, application of acceptable levels of risk, rules of engagement, "go / no-go" decisions, etc. MDO data collection and curation may include a framework for what objective and subjective data may be most important. The scope of data collection can be further segmented by associating objective and subjective data streams with the AI agent, environment, state or observation needed to inform the ML algorithm at play. Contextual labels supported by expert comments may be used for proper data curation to support RL efforts.

For a candidate ML algorithm to be suitable for use by the agents 404A-C, such algorithms should be scalable to multiple (i.e., potentially hundreds or more) agents 404 while remaining computationally tractable. Such an algorithm should also: execute in a decentralized and human-compatible way at execution time, be able to train with humans or human data to optimize for a policy that works with humans, have a provably robust objective to support safety and reliability, address the challenges of generalization in multiple forms, generalize from simulation dynamics to the real-world equivalent, generalize across mission parameters or be tractably re-trainable on a per-mission basis, generalize to unseen ally and adversary policies for zero-shot coordination, and generalize or quickly adapt to changes in environment dynamics including technological advancements and the discovery of new information.

A candidate algorithm should address the safety concerns of ML at large and RL in particular. It can be difficult to define how an autonomous system should behave in an MDO scenario, but even an artificial agent which completes its individual task efficiently could be unacceptable if the method it uses to complete said task is prohibitively risky, dangerous, distracting, or otherwise disruptive to its allies. Any desirable ML solution should have a robust objective definition so that autonomous agents are not incentivized to take undesirable behavior to exploit a flawed reward function. Some strategies may add a reward parameter for human feedback which is largely compatible with the other methods included in the above tables. For this reason, a theoretical table may be included, in which human feedback is given to each model. Some strategies may also use a separate network to estimate the human reward function in order to increase sample efficiency from humans or to punish divergence from a human demonstration model. The mechanism of human feedback may promote safety by guaranteeing that the function being optimized includes human preferences. Outside of human preferences, either a very robust reward function or very limited use of RL would be needed, and it is not guaranteed that an expressive enough reward function can be reasonably constructed. Additionally, even in simple tasks, human feedback is often able to lead to better performance than a synthetic reward function. Any candidate algorithm used by the Agents 404A-C should also be compatible with strategies to generalize from simulated or recorded data to the real world. The agents 404A-C should generalize to the conditions of the real world from a simulated or recorded training example with equivalent parameters but should also generalize to different mission parameters such as new available technology and different allies and adversaries which may act differently than any entities encountered during training.

The critics 406A-C and the actors 408A-C of the agents 404A-C may receive input data 416. The input data 416 may include, among other things, demonstration data, decision quality feedback, contextual labels, and interventions, such as data generated by the data pipeline 300 depicted in FIG. 3. Demonstration data may include, among other things, recordings of actions taken during missions or training exercises from low-level control inputs to mid and high-level tactical decisions. These recordings, featuring the decisions made by human experts, would form the core dataset for imitation learning and model pre-training at any level of autonomy. Demonstration data may be useful for bypassing initially expensive search and encouraging human aligned policies.

Decision quality feedback may include expert annotation of mission recordings supplied both in real-time and during debrief would serve to prioritize or eliminate human decisions from the dataset based on their quality. This feedback may occur in the form of plain text in which sentiment analysis extracts a quasi- reward signal, or it may occur as a rigid predefined schema for consistency. If actions in training are taken by autonomous agents and evaluated by human experts, then these evaluations serve as a human reward signal as in RLHF which can align autonomous systems more directly with hard to define human goals than a traditional reward signal.

Contextual labels may include an initial mission plan/syllabus, commander intent, expected resistance, and many other contextual details directly define optimal behavior in a given operation. Without this information recorded and encoded in a schema which is digestible by an AS, the expected behavior of such systems is therefore undefined. If the information is needed for a human to make an accurate decision, then it is needed for an AS as well. Additionally, changes in state which warrant changes in local commander decision making change optimal behavior and should also be recorded.

Intervention data includes a human correction to an AS's poor decision. These could be collected via hindsight decision analysis in debrief, or via human operators assuming control of a failing AS in real time during training. Intervention data is widely used throughout imitation learning, and it is consistent with a desirable property of AS in that they should be override-able and self-correcting. Interventions may not only occur at the control level, but rather the decision-making level as well. Expecting human actors to take over the complete control of an autonomous actor during mission execution is unreasonable due to the already maximal cognitive load on human actors, so stability and the ability to intervene at high levels of abstraction are desirable.

The critics 406A-C may estimate the expected reward given certain information. Unlike independent Q learning, the critics 406A-C may be able to see the actions of all agents along with some state information. This means that each critic 406A-C, or reward function, is conditioned on all agents 404A-C so that credit may be assigned accordingly. At execution time, the critics 406A-C are not used, and each policy executes in a decentralized way because they are done training and no longer need information from the centralized critics 406A-C.

The agents 404A-C may choose a procedural controller 410A-C to perform a command given the current observations to which the agents 404A-C have access. The procedural controllers 410A-C may, therefore, act on commands output by the respective agents 404A-C. For example, in multi-domain operations, an agent 404A may select a target with a command based on a mission context and an environment state such that the procedural controller 410A acts on the command. The procedural controllers 410A-C may be responsible for performing low-level controls, such as actuating an elevator on an aircraft or the steering control bars on a tank. These controls may be driven by simple objectives that may be determined by higher level objectives from the agents 404A-C, such as arriving at a waypoint which is specified by even higher-level objectives like gaining a positional advantage in a battle.

The environmental module 412 may be responsible for determining whether the actions taken by the procedural controllers 410A-C are appropriate for the context. For example, the environmental module may confirm the actions performed by the procedural controllers 410A-C are the correct actions instructed to be carried out by the agents 404A-C. Additionally, the environmental module 412 may collect environmental data for assisting the agents 404A-C with making correct future decisions. The environmental module may generate feedback data 418 based on the confirmation of actions taken and the environmental data. The feedback data 418 may be stored in the memory 414 and may be made available to the agents 404A-C.

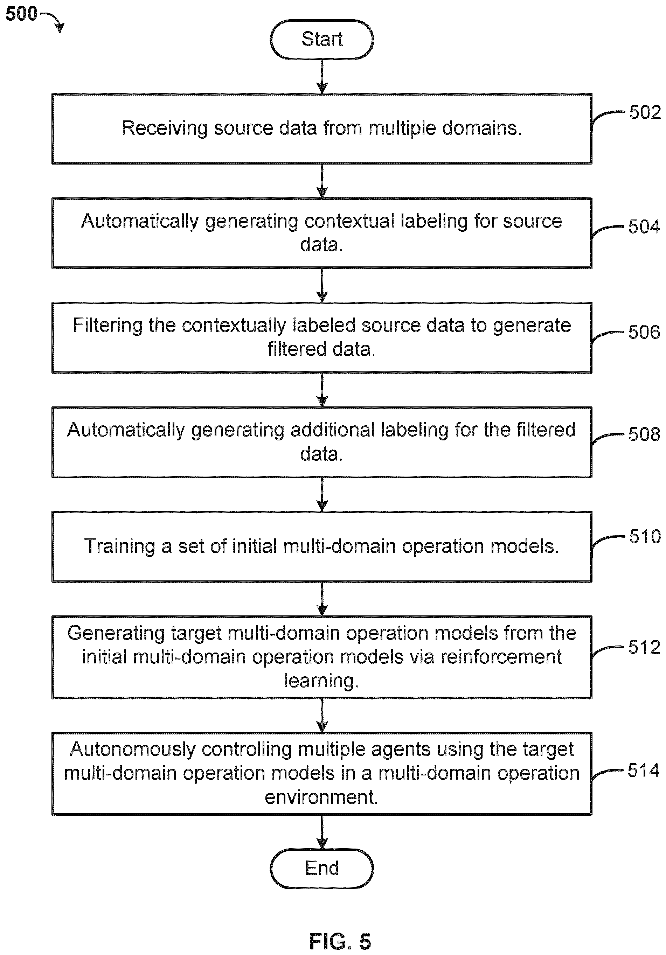

Referring now to FIG. 5, an operational flowchart illustrating the steps of a method 500 carried out by a program that collects and curates data in a multi-domain operation environment is depicted.

At 502, the method 500 may include receiving source data from multiple domains.

At 504, the method 500 may include automatically generating contextual labeling for source data.

At 506, the method 500 may include filtering the contextually labeled source data to generate filtered data.

At 508, the method 500 may include automatically generating additional labeling for the filtered data.

At 510, the method 500 may include training a set of initial multi-domain operation models.

At 512, the method 500 may include generating target multi-domain operation models from the initial multi-domain operation models via reinforcement learning.

At 514, the method 500 may include autonomously controlling multiple agents using the target multi-domain operation models in a multi-domain operation environment.

It may be appreciated that FIG. 5 provides only an illustration of one implementation and does not imply any limitations with regard to how different embodiments may be implemented. Many modifications to the depicted environments may be made based on design and implementation requirements.

FIG. 6 is a block diagram 600 of internal and external components of computers depicted in FIG. 1 in accordance with an illustrative embodiment. It should be appreciated that FIG. 6 provides only an illustration of one implementation and does not imply any limitations with regard to the environments in which different embodiments may be implemented. Many modifications to the depicted environments may be made based on design and implementation requirements.

Computer 102 (FIG. 1) and server computer 114 (FIG. 1) may include respective sets of internal components 800A,B and external components 900A,B illustrated in FIG. 6. Each of the sets of internal components 800 include one or more processors 820, one or more computer-readable RAMs 822 and one or more computer-readable ROMs 824 on one or more buses 826, one or more operating systems 828, and one or more computer-readable tangible storage devices 830.

Processor 820 is implemented in hardware, firmware, or a combination of hardware and software. Processor 820 is a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some implementations, processor 820 includes one or more processors capable of being programmed to perform a function. Bus 826 includes a component that permits communication among the internal components 800A,B.

The one or more operating systems 828, the software program 108 (FIG. 1) and the Data Curation Program 116 (FIG. 1) on server computer 114 (FIG. 1) are stored on one or more of the respective computer-readable tangible storage devices 830 for execution by one or more of the respective processors 820 via one or more of the respective RAMs 822 (which typically include cache memory). In the embodiment illustrated in FIG. 6, each of the computer-readable tangible storage devices 830 is a magnetic disk storage device of an internal hard drive. Alternatively, each of the computer-readable tangible storage devices 830 is a semiconductor storage device such as ROM 824, EPROM, flash memory, an optical disk, a magneto-optic disk, a solid state disk, a compact disc (CD), a digital versatile disc (DVD), a floppy disk, a cartridge, a magnetic tape, and/or another type of non-transitory computer-readable tangible storage device that can store a computer program and digital information.

Each set of internal components 800A,B also includes a R/W drive or interface 832 to read from and write to one or more portable computer-readable tangible storage devices 936 such as a CD-ROM, DVD, memory stick, magnetic tape, magnetic disk, optical disk or semiconductor storage device. A software program, such as the software program 108 (FIG. 1) and the Data Curation Program 116 (FIG. 1) can be stored on one or more of the respective portable computer-readable tangible storage devices 936, read via the respective R/W drive or interface 832 and loaded into the respective hard drive 830.

Each set of internal components 800A,B also includes network adapters or interfaces 836 such as a TCP/IP adapter cards; wireless Wi-Fi interface cards; or 3G, 4G, or 5G wireless interface cards or other wired or wireless communication links. The software program 108 (FIG. 1) and the Data Curation Program 116 (FIG. 1) on the server computer 114 (FIG. 1) can be downloaded to the computer 102 (FIG. 1) and server computer 114 from an external computer via a network (for example, the Internet, a local area network or other, wide area network) and respective network adapters or interfaces 836. From the network adapters or interfaces 836, the software program 108 and the Data Curation Program 116 on the server computer 114 are loaded into the respective hard drive 830. The network may comprise copper wires, optical fibers, wireless transmission, routers, firewalls, switches, gateway computers and/or edge servers.

Each of the sets of external components 900A,B can include a computer display monitor 920, a keyboard 930, and a computer mouse 934. External components 900A,B can also include touch screens, virtual keyboards, touch pads, pointing devices, and other human interface devices. Each of the sets of internal components 800A,B also includes device drivers 840 to interface to computer display monitor 920, keyboard 930 and computer mouse 934. The device drivers 840, R/W drive or interface 832 and network adapter or interface 836 comprise hardware and software (stored in storage device 830 and/or ROM 824).

Some embodiments may relate to a system, a method, and/or a computer program product at any possible technical detail level of integration. The computer program product may include a computer-readable non-transitory storage medium (or media) having computer readable program instructions thereon for causing a processor to carry out operations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus, or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer readable media according to various embodiments. In this regard, each block in the flowchart or block diagrams may represent a module, segment, or portion of instructions, which comprises one or more executable instructions for implementing the specified logical function(s). The method, computer system, and computer program product may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

No element, act, or instruction used herein should be construed as critical or essential unless explicitly described as such. Also, as used herein, the articles "a" and "an" are intended to include one or more items and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

The descriptions of the various aspects and embodiments have been presented for purposes of illustration but are not intended to be exhaustive or limited to the embodiments disclosed. Even though combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

**Claims**

1. A method for data contextualization for a multi-domain socio-technical work environment (MSWE) executable by a processor, comprising:

   receiving event data items for multi-domain operation of the MSWE captured via instrumentation from multiple domains;
   obtaining subjective contextual information data items provided by annotators of the event data items, wherein at least a portion of the subjective contextual information data items is obtained by periodical queries of true objective functions for trusted learning;
   retrieving objective contextual information data items pertaining to the annotators, the subjective contextual information data items comprise a plurality of distinct types;
   transforming the objective contextual information data items into trustworthiness measures via multi-dimensional embedding vectors; and
   integrating the event data items, the subjective contextual information data items, the objective contextual information data items, and the trustworthiness measures into a contextually labeled source data to enable the trusted learning.

2. The method of claim 1, wherein the subjective contextual information data items comprise at least one of:

a subjective scenario descriptor of an event;
an event objective;
event objective prioritization;
a support goal of the event;
a support task for the event;
plan-adherence information;
accepted risk information;
time constraints for the event;
inter-domain coordination synchronization information;
situation assessment of the event;
actual or inferred adverse capability; or
re-task effectiveness.

3. The method of claim 1, wherein the subjective contextual information data items are obtained in a hierarchical manner.

4. The method of claim 3, wherein the subjective contextual information data items comprise at least a real-time portion and a post-event portion obtained during and after an event, respectively.

5. The method of claim 1, further comprising:

filtering the contextually labeled source data to generate filtered data;
training a set of initial MSWE models, each MSWE model being applied to a particular domain and being trained using both the contextually labeled source data of the particular domain and the contextually labeled source data as filtered from one or more other domains;
generating target multi-domain operation models from the initial MSWE models via reinforcement learning (RL); and
autonomously controlling multiple agents using the target multi-domain operation models in a multi-domain operation environment.

6. The method of claim 5, wherein the target multi-domain operation models comprise a plurality of agent models and a value decomposition network.

7. The method of claim 6, wherein each of the plurality of agent models comprises a hierarchical network for controlling one of the multiple agents.

8. The method of claim 5, wherein each agent of the multiple agents corresponds to a soft actor critic architecture and comprises an actor and a critic.

9. The method of claim 8, wherein each actor corresponds to a Q function approximator and each critic corresponds to a policy approximator.

10. The method of claim 5, wherein:

the method further comprises selecting a machine learning (ML) algorithm from among a plurality of ML algorithms, wherein: the multiple agents are autonomously controlled by the selected ML algorithm based on the target multi-domain operation models in the MSWE; and/or
the multiple agents comprise a plurality of autonomous aircraft configured to perform a combat mission.

11. A system comprising a memory for storing instructions and at least one processor for executing the instructions to perform data contextualization for a multi-domain socio-technical work environment (MSWE) by:

receiving event data items for multi-domain operation of the MSWE captured via instrumentation from multiple domains;
obtaining subjective contextual information data items provided by annotators of the event data items, wherein at least a portion of the subjective contextual information data items is obtained by periodical queries of true objective functions for trusted learning;
retrieving objective contextual information data items pertaining to the annotators, the subjective contextual information data items comprise a plurality of distinct types;

transforming the objective contextual information data items into trustworthiness measures via multi-dimensional embedding vectors; and

integrating the event data items, the subjective contextual information data items, the objective contextual information data items, and the trustworthiness measures into a contextually labeled source data to enable the trusted learning.

12. The system of claim 11, wherein the subjective contextual information data items comprise at least one of:

a subjective scenario descriptor of an event;
an event objective;
event objective prioritization;
a support goal of the event;
a support task for the event;
plan-adherence information;
accepted risk information;
time constraints for the event;
inter-domain coordination synchronization information;
situation assessment of the event;
actual or inferred adverse capability; or

re-task effectiveness, optionally wherein the subjective contextual information data items are obtained in a hierarchical manner, optionally wherein the subjective contextual information data items comprise at least a real-time portion and a post-event portion obtained during and after an event, respectively.

13. The system of claim 11, wherein the at least one processor is configured to execute the instructions to further perform:

filtering the contextually labeled source data to generate filtered data;
training a set of initial MSWE models, each MSWE model being applied to a particular domain and being trained using both the contextually labeled source data of the particular domain and the contextually labeled source data as filtered from one or more other domains;
generating target multi-domain operation models from the initial MSWE models via reinforcement learning (RL); and
autonomously controlling multiple agents using the target multi-domain operation models in a multi-domain operation environment.

14. The system of claim 13, wherein the target multi-domain operation models comprise a plurality of agent models and a value decomposition network, optionally wherein each of the plurality of agent models comprises a hierarchical network for controlling one of the multiple agents.

15. The system of claim 13, wherein each agent of the multiple agents corresponds to a soft actor critic architecture and comprises an actor and a critic, optionally wherein each actor corresponds to a Q function approximator and each critic corresponds to a policy approximator.

100

Computer 102

Processor
104

Data Storage
Device 106

Software
Program
108

Communication Network
110

Database
112

Data Curation
Program
116

Server Computer 114

FIG. 1

**FIG. 2**

EP 4 730 206 A1

300

```
┌──────────────┐
│ Record       │
│ Scenarios in │
│ Training/     │
│ Missions 302 │
└──────┬───────┘
       │
       ▼
┌──────────────┐      ┌─────────────────────┐      ┌──────────────┐
│ Expert Data  │      │ Human               │      │ IL Agent 318 │
│ Curation /   │──┐   │ Demonstration       │      └──────┬───────┘
│ Context 304  │  │   │ Data 316            │             │
└──────┬───────┘  │   ├─────────────────────┤             ▼
       │          │   │ Human Episode       │      ┌──────────────┐
       │          └──▶│ H-A 308             │      │ Human Data   │
       ▼              ├─────────────────────┤      │ Training 320 │
┌──────────────┐  ┌──▶│ Human Episode       │      └──────┬───────┘
│ AI Annotated/│  │   │ AI-A 310            │             │
│ Labeled Data │──┤   ├─────────────────────┤      ┌──────┴───────┐
│ 306          │  ├──▶│ Human Episode       │      │ Field Data 322│
└──────────────┘  │   │ AI-A 312            │      ├──────────────┤
                  │   ├─────────────────────┤      │ Human-AI     │
                  └──▶│ Human Episode       │      │ Ep. H-A 324  │
                      │ AI-A 314            │      └──────────────┘
                      └─────────────────────┘
```

| Recent Memory Buffer 326 | → | Permanent Memory Buffer 328 |

Fine Tune with Off-Policy Reinforcement Learning 330

**FIG. 3**

**FIG. 4**

500

Start

Receiving source data from multiple domains. — 502

Automatically generating contextual labeling for source data. — 504

Filtering the contextually labeled source data to generate filtered data. — 506

Automatically generating additional labeling for the filtered data. — 508

Training a set of initial multi-domain operation models. — 510

Generating target multi-domain operation models from the initial multi-domain operation models via reinforcement learning. — 512

Autonomously controlling multiple agents using the target multi-domain operation models in a multi-domain operation environment. — 514

End

FIG. 5

**FIG. 6**

EP 4 730 206 A1

700

Supervised algorithm decision boundary
Optimal decision boundary

FIG. 7

Europäisches
Patentamt
European
Patent Office
Office européen
des brevets

## EUROPEAN SEARCH REPORT

Application Number

EP 25 19 0029

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/130219 A1 (C3 AI INC [US]) 20 June 2024 (2024-06-20) * paragraph [0057] * * paragraph [0070] * * paragraph [0102] * * paragraph [0106] * * paragraph [0111] * * paragraph [0114] - paragraph [0115] * * paragraph [0120] - paragraph [0121] * * paragraph [0136] * * paragraph [0158] * * paragraph [0170] * * paragraph [0177] * * paragraph [0209] * * paragraph [0244] - paragraph [0245] * * paragraph [0276] - paragraph [0279] * * paragraph [0301] * * paragraph [0309] * * paragraph [0329] * * figures 1, 3 * | 1-15 | INV. G06N3/09 G06N20/00 |

-----

TECHNICAL FIELDS SEARCHED (IPC)

G06N

The present search report has been drawn up for all claims

| Place of search | Date of completion of the search | Examiner |
|---|---|---|
| The Hague | 16 March 2026 | Baldan, Marco |

EPO FORM 1503 03.82 (P04C01)

## ANNEX TO THE EUROPEAN SEARCH REPORT
## ON EUROPEAN PATENT APPLICATION NO.

EP 25 19 0029

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | Publication date | Patent family member(s) | | Publication date |
|---|---|---|---|---|
| WO 2024130219 A1 | 20-06-2024 | CN | 120615194 A | 09-09-2025 |
| | | CN | 120641878 A | 12-09-2025 |
| | | CN | 120660090 A | 16-09-2025 |
| | | CN | 120693607 A | 23-09-2025 |
| | | CN | 120770033 A | 10-10-2025 |
| | | EP | 4487247 A1 | 08-01-2025 |
| | | EP | 4634779 A1 | 22-10-2025 |
| | | EP | 4634789 A1 | 22-10-2025 |
| | | EP | 4634830 A1 | 22-10-2025 |
| | | EP | 4634837 A1 | 22-10-2025 |
| | | US | 2024202221 A1 | 20-06-2024 |
| | | US | 2024202225 A1 | 20-06-2024 |
| | | US | 2024202464 A1 | 20-06-2024 |
| | | US | 2024202539 A1 | 20-06-2024 |
| | | US | 2024202600 A1 | 20-06-2024 |
| | | US | 2024419713 A1 | 19-12-2024 |
| | | US | 2025094474 A1 | 20-03-2025 |
| | | US | 2025124069 A1 | 17-04-2025 |
| | | US | 2025131028 A1 | 24-04-2025 |
| | | US | 2025190475 A1 | 12-06-2025 |
| | | WO | 2024130215 A1 | 20-06-2024 |
| | | WO | 2024130219 A1 | 20-06-2024 |
| | | WO | 2024130220 A1 | 20-06-2024 |
| | | WO | 2024130222 A1 | 20-06-2024 |
| | | WO | 2024130232 A1 | 20-06-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63695604